(19) Europäisches Patentamt
European Patent Office
Office européen des brevets

(11) Numéro de publication: **0 045 699**
**A1**

(12) # DEMANDE DE BREVET EUROPEEN

(21) Numéro de dépôt: 81401259.7

(22) Date de dépôt: 04.08.81

(51) Int. Cl.[3]: B 01 D 1/28
B 01 D 3/36, B 01 D 3/00
B 01 D 3/14, B 01 D 1/26

(30) Priorité: 05.08.80 FR 8017313

(43) Date de publication de la demande: 10.02.82 Bulletin 82/6

(84) Etats contractants désignés: BE DE GB IT NL SE

(71) Demandeur: CEM COMPAGNIE ELECTRO-MECANIQUE
12, rue Portalis
F-75008 Paris(FR)

(72) Inventeur: Sterlini, Jacques
7 Rue du Mail
F-75002 Paris(FR)

(74) Mandataire: Phélip, Bruno et al,
c/o Cabinet HARLé & LECHOPIEZ 21, rue de La Rochefoucauld
F-75009 Paris(FR)

(54) **Procédé pour la rectification de mélanges binaires avec pompage de chaleur et moyens pour sa mise en oeuvre.**

(57) Procédé pour la rectification de mélanges binaires avec pompage de chaleur et moyens pour sa mise en oeuvre. On fait fonctionner une machine polytropique avec, comme fluide de travail, un mélange des composants A et B à séparer. L'étage d'introduction (12) est intercalé entre le module d'épuisement (10) et le module de rectification (11). L'invention permet une rectification sans apport extérieur de chaleur et en ne fournissant que du travail, celui-ci ayant une valeur proche de la valeur théorique du travail nécessaire à la séparation des composants A et B (dénommé travail de démélange).

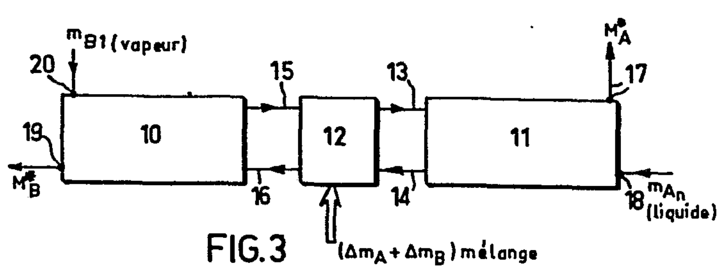


FIG.3

EP 0 045 699 A1

Procédé pour la rectification de mélanges binaires avec pompage de chaleur et moyens pour sa mise en oeuvre.

L'invention concerne le domaine de la rectification des mélanges liquides de deux composants présentant des différences de points d'ébullition.

La séparation par distillation des composants d'un mélange liquide binaire est une technique bien connue et éprouvée. A titre de référence bibliographique générale sur un tel sujet, on peut par exemple citer l'ouvrage de S.G. SHINSKEY "Distillation Control for production and energy conservation" Mac Graw Hill Edit. USA, (1977).

Il convient bien entendu de perfectionner la rectification traditionnelle dans le but d'économiser l'énergie, en essayant d'obtenir des rendements thermodynamiques améliorés.

On a déjà équipé des colonnes de rectification avec des pompes à chaleur utilisant comme sources les condenseurs et les bouilleurs de colonnes. Ces opérations ont été limitées jusqu'ici aux applications où les températures de bouilleur n'excédaient pas 80°C environ, du fait de la limitation de fonctionnement en température des pompes à chaleur disponibles jusqu'à présent dans le commerce. Même en utilisant des fluides de travail plus performants avec des températures de bouilleur dépassant 80°C et atteignant par exemple 120°C on ne peut ainsi équiper qu'une faible partie des colonnes existantes. Par ailleurs, les opérations réalisées restent en nombre très restreint, l'économie d'exploitation ne permettant pas en général un remboursement rapide de l'investissement. Les performances des pompes à chaleur (en abrégé PAC) sont insuffisantes en raison du rendement thermodynamique limité du

matériel classique. Dans le cas considéré, ce rendement est aggravé par les écarts de température d'échange du fait de l'emploi d'un fluide caloporteur intermédiaire entre "condenseur-colonne" - "bouilleur PAC" et "bouilleur colonne" - condenseur PAC".

Le procédé suivant l'invention permet à la fois d'échapper à toute limitation de température et de mettre en oeuvre un pompage de la chaleur entre le condenseur et le bouilleur de la colonne avec le meilleur rendement thermodynamique possible.

L'invention tire profit de processus connus, dénommés processus dits "polytropiques", qui sont mis en oeuvre dans des machines dites "polytropiques". Ces procédés et machines sont notamment décrits dans les demandes de brevets français FR 75 114 38 (publication 2 307 227), FR 76 14 965 (publication 2 352 247) et FR 77 07 041 (publication 2 383 411 ).

Les machines polytropiques sont constituées d'une série de cellules à pressions/températures étagées, dans lesquelles circule un fluide de travail présent dans chaque cellule sous forme de vapeur saturante en contact avec son liquide. Il existe en outre, au moins dans certaines cellules, un ou plusieurs faisceaux de chauffe ou de refroidissement, lesquels mettent les cellules en relation avec des fluides caloporteurs qui y apportent la chaleur d'une source productrice ou extraient la chaleur destinée à une zone de consommation. Enfin, chaque cellule est mise en relation avec les voisines, d'une part, sur le trajet de la vapeur, par un compresseur ou par une turbine selon que la chaleur primaire entrant dans le processus est disponible en moyenne à haut niveau de température ou à bas niveau, la vapeur montant ou descendant les niveaux de pressions/températures mettant ainsi en jeu du travail extérieur qui peut être dénommé "travail de transvasement", et d'autre part, sur le trajet du liquide qui circule en sens inverse de la vapeur et en quantité égale, par un orifice calibré, pour descendre les niveaux de pressions/températures ou par une pompe pour les remonter. Il suffira à l'homme de l'art de se reporter aux descriptions des brevets cités ci-dessus pour connaître la structure et le fonctionnement de telles machines.

Dans le cas où le fluide caloporteur apporte de la chaleur (il circule alors en traversant en série les étages dans le sens des températures décroissantes), de la vapeur du fluide de travail est produite par ébullition du liquide présent dans la cellule, et,dans le cas contraire, de la vapeur du fluide de travail se condense. Ainsi, les débits de vapeur et de liquide évoluent d'étage en étage selon les quantités de chaleur apportées ou soustraites en fonction de la loi Q(T) selon laquelle l'apport ou l'extraction de chaleur sont réalisés, c'est-à-dire en fonction du dimensionnement des faisceaux d'échange.

Il est important de noter qu'en principe, à l'interface entre deux cellules successives, la somme des débits du fluide de travail entrant sous forme de vapeur ou sous forme de liquide est toujours égale à la somme des débits de ce même fluide de travail sortant sous forme de liquide ou sous forme de vapeur, les débits de fluide de travail vapeur et liquide circulant en sens inverse dans un étage étant toujours égaux.

On peut remarquer que les machines polytropiques décrites dans les brevets précités peuvent être formées à partir de quatre suites élémentaires simples, à savoir :

-suite à compresseurs refroidie, utilisée pour un "processus de condensation avec travail absorbé"

-suite à compresseurs réchauffée, utilisée pour un "processus d'ébullition avec travail absorbé"

-suite à turbines refroidie, utilisée pour un "processus de condensation avec travail fourni"

-suite à turbines réchauffée, utilisée pour un "processus d'ébullition avec travail fourni".

Ces quatre types élémentaires de suites comportent toutes un étage d'extrémité ouvert où entrent et sortent les débits liquide et vapeur du fluide de travail, et un étage d'extrémité fermé où le fluide de travail est soit totalement vaporisé, soit totalement condensé.

Le tableau suivant indique le côté où se trouve l'étage ouvert, les entrées et sorties du fluide de travail vis-à-vis de la suite considérée ainsi que la direction de circulation du fluide caloporteur.

| Type de suite | Etage ouvert | Fluide de travail | Direction du fluide caloporteur |
|---|---|---|---|
| Suite à compresseurs réchauffée | plus haute température | entre liquide sort vapeur | températures décroissantes |
| Suite à compresseurs refroidie | plus basse température | entre vapeur sort liquide | températures croissantes |
| Suite à turbines réchauffée | plus basse température | entre liquide sort vapeur | températures décroissantes |
| Suite à turbines refroidie | plus haute température | entre vapeur sort liquide | températures croissantes |

Dans ces systèmes, le fluide caloporteur peut traverser plusieurs étages successifs, ou un seul étage. On peut à la limite avoir un circuit caloporteur de nature différente par étage d'une suite déterminée.

Il est également connu que le fonctionnement d'une machine polytropique peut être généralisé au cas où les débits liquide et vapeur de fluide de travail à l'entrée de l'étage ouvert sont différents ; dans ce cas, la différence des débits circulant dans les deux sens se conserve à la valeur qu'elle possède à l'entrée jusqu'à l'autre étage d'extrémité qui est donc traversé par un débit de fluide de travail, et n'est donc plus un étage fermé, on dira dans ce cas qu'on est en présence d'un "processus ouvert aux deux extrémités", ou plus simplement d'un processus ouvert.

On notera donc que le processus polytropique le plus général comporte les caractéristiques suivantes :

1°) Il est multiétagé en pressions et températures.

2°) Dans chaque étage, le liquide et la vapeur du fluide de travail condensable sont mis en contact et échangent de la chaleur et de la matière.

3°) La vapeur du fluide de travail circule d'étage en étage en traversant des machines tournantes mettant en jeu du travail. La différence de températures entre deux étages successifs n'existe en principe que de ce seul fait ; la température augmente d'un étage à l'autre dans le sens de parcours de la vapeur si la machine tournante est un compresseur, alors qu'elle diminue s'il s'agit d'une turbine.

4°) Le liquide du fluide de travail circule d'étage en étage en sens inverse de la vapeur ; les

débits liquide et vapeur circulant entre deux étages ont une différence qui se répercute d'étage en étage.

5°) Chaque étage peut échanger de la chaleur avec l'extérieur.

La présente invention a essentiellement pour objet un procédé destiné à la rectification d'un mélange binaire de deux composants A et B, A étant le plus volatil, sans apport extérieur de chaleur et en ne fournissant que du travail, celui-ci ayant une valeur proche de la valeur théorique du travail nécessaire à la séparation des composants A et B (dénommé travail de démélange).

Sous sa forme la plus générale, l'invention a donc pour objet un procédé pour la rectification d'un mélange liquide de deux composants A et B , A étant le plus volatil, dans lequel on utilise un processus polytropique ouvert mettant en jeu un fluide de travail condensable, comportant une pluralité d'étages, dans chacun desquels le liquide et la vapeur dudit fluide sont en présence, les débits vapeur et liquide du fluide de travail circulant en sens inverse l'un de l'autre d'étage en étage, la différence entre les débits liquide et vapeur du fluide de travail circulant entre deux étages contigus étant conservée d'étage en étage jusqu'aux étages d'extrémité, processus dans lequel on peut mettre en jeu, au niveau de chaque étage, du travail et des échanges de chaleur avec un fluide caloporteur extérieur, ledit procédé étant caractérisé en ce qu'on utilise le mélange A + B à rectifier, comme fluide de travail dans le processus polytropique ouvert sus-mentionné dénommé processus principal dont les étages d'extrémité sont dénommés "premier étage" et "dernier étage", de

façon telle qu'on passe du premier au dernier en suivant le sens de parcours de la vapeur dans ledit processus, et comportant une distribution de pressions-températures telle que dans le premier étage il n'y ait que du composant B pratiquement pur et dans le dernier étage que du composant A pratiquement pur, en ce que, dans l'étage où la concentration liquide est la plus proche de celle du mélange, on introduit la charge à rectifier soit un mélange composé d'un débit $\Delta\ m_A$ du corps A et $\Delta\ m_B$ du corps B préalablement portée à la pression-température dudit étage, dénommé étage d'alimentation, les étages allant dans le sens croissant depuis l'étape d'alimentation jusqu'au dernier étage étant dénommés étages de rectification et constituant ensemble un module de rectification, la différence des débits vapeur et liquide du constituant B étant sensiblement nulle dans le module de rectification, tandis que la différence des débits vapeur et liquide du constituant A est égale à $\Delta\ m_A$ et se répercute d'étage en étage dans le module de rectification jusqu'au dernier, où l'on recueille un débit vapeur $\Delta\ m_A$ accompagné d'un débit vapeur supplémentaire $m_A^*$ , en ce qu'on réinjecte, après condensation, le même débit $m_A^*$ dans le dernier étage, pour constituer le reflux de A, les étages allant dans le sens décroissant depuis l'étage d'alimentation jusqu'au premier étage, étant dénommés étages d'épuisement, et constituant ensemble un module d'épuisement, la différence des débits vapeur et liquide du constituant A dans le module d'épuisement étant sensiblement nulle, tandis que la différence des débits liquide et vapeur du constituant B est égale à $\Delta\ m_B$ et se répercute d'étage en étage dans le module d'épuisement jusqu'au premier, où l'on

recueille un débit liquide $\Delta m_B$ accompagné d'un débit liquide supplémentaire $m^*_B$, en ce qu'on réinjecte, après vaporisation, le même débit $m^*_B$ dans le premier étage pour constituer le reflux de B, les débits vapeur $\Delta m_A$ au dernier étage et liquide $\Delta m_B$ au premier étage constituant la production.

La description qui suit sera faite en référence aux dessins annexés sur lesquels :

- Figure 1 est un diagramme connu d'équilibre pour les mélanges binaires ;

- Figure 2 est un diagramme simplifié, analogue à celui de la figure 1, mettant en évidence diverses variantes du procédé de l'invention ;

- Figure 3 est un schéma illustrant la mise en oeuvre du procédé de l'invention ;

- Figure 4 est un système isotherme pour la mise en oeuvre du procédé de l'invention ;

- Figure 5 est un dispositif complet faisant application des moyens représentés aux figures 3 et 4 ;

- Figure 6 est un schéma théorique illustrant la combinaison d'un processus principal et d'un processus associé ;

- Figure 7 est un schéma plus complet faisant application des moyens représentés à la figure 6 ;

- Figure 8 est un schéma analogue à celui de la figure 7, dans une variante d'exécution ;

- Figure 9 illustre la machine polytropique principale utilisée, selon l'invention, dans le système de la figure 11.

- Figure 10 illustre la machine polytropique associée utilisée, selon l'invention, dans le système de la figure 11 ;

- Figure 11 est un système complet pour la mise en oeuvre d'un processus principal à pression et température croissantes et d'un processus associé

à turbines ;

- Figure 12 illustre la machine polytropique associée utilisée, selon l'invention, dans le système de la figure 13 ;

- Figure 13 est un système complet pour la mise en oeuvre d'un processus principal à pression et température croissantes et d'un processus associé à compresseurs ;

- Figure 14 est un système pour la mise en oeuvre d'un processus principal à pression constante et d'un processus associé à compresseurs ;

- Figure 15 illustre la machine polytropique principale utilisée, selon l'invention, dans le système de la figure 17 ;

- Figure 16 illustre la machine polytropique associée, utilisée selon l'invention, dans le système de la figure 17 ;

- Figure 17 est un système complet pour la mise en oeuvre d'un processus principal à pression et température décroissantes et d'un processus associé à compresseurs ;

- Figure 18 est un diagramme théorique analogue à celui des figures 1 et 2 et illustrant des variantes de l'invention ;

- Figure 19 est un schéma illustrant le procédé de l'invention pour la séparation d'un mélange azéotropique ;

- Figure 20 est un diagramme basé sur la figure 14 et destiné à illustrer les calculs exécutés conformément à l'invention ;

- Figure 21 illustre une construction géométrique permettant de déterminer le nombre d'étages d'une colonne de rectification réalisée conformément à l'invention ;

- Figures 22a et 22b sont des graphiques

établis pour l'isobutane et le propane avec un processus principal isobare ;

- Figures 23a et 23b sont des graphiques établis pour le méthanol et l'eau avec un processus principal isobare ;

- Figures 24a et 24b sont des graphiques établis pour l'isobutane et le propane avec un processus principal isotherme ;

- Figures 25a et 25b sont des graphiques établis pour le méthanol et l'eau avec un processus principal isotherme ;

- Figure 26 est un schéma illustrant la méthode enthalpique de calcul d'une colonne de rectification conventionnelle.

Afin d'illustrer l'invention, il convient tout d'abord de se reporter aux courbes connues d'équilibre pressions-températures, fonction des concentrations vapeur et liquide du mélange A-B. Ces courbes sont représentées sur la figure 1 pour un mélange dont le comportement est proche de celui des solutions idéales ; on y reconnaît les courbes en fuseau bien connues établies pour les pressions $P_1$, $P_2$, $P_3$ avec $P_1 < P_2 < P_3$ où les températures T sont représentées en fonction des concentrations <u>c</u> du corps A liquide et vapeur ; les courbes (1), (2), (3) de la figure 1 sont relatives aux concentrations liquides, et les courbes (1'),(2'),(3') aux concentrations vapeurs respectivement pour les pressions $P_1$, $P_2$, $P_3$. Selon la caractéristique de l'invention, on fait fonctionner une machine polytropique, avec comme fluide de travail, un mélange des composants A, B.

Il s'établit alors dans la suite d'étages de la machine des pressions et des températures telles que :

$[p_A, T_A]$, $[p_B, T_B]$... $[pi, Ti]$...$[pn, Tn]$, et des couples de concentrations variables du liquide (x) et de la vapeur (y) tels que :

$[x_A, y_A]$, $[x_B, y_B]$,... $[xi, yi]$... $[xn, yn]$

correspondant à un enrichissement en l'un des composants et à un appauvrissement en l'autre composant lorsqu'on passe du premier au dernier étage.

A titre d'exemple avec une suite à compresseurs réchauffée, on peut avoir dans le premier et le dernier étage, les conditions représentées sur la figure 1 :

premier étage à $p_1$, $T_1$ concentrations liquide et vapeur : $x_1$ et $y_1$; dernier étage à $p_3$, $T_3$ concentrations liquide et vapeur : $x_3$ et $y_3$.

La théorie des machines polytropiques indique par ailleurs qu'on peut, en jouant sur la vitesse des compresseurs, et sur la distribution des efforts de chaleur aux différents étages, faire en sorte que les conditions s'établissant dans le premier et le dernier étage donnent lieu à des concentrations correspondant respectivement aux composants B et A purs.

Les conditions de pression-température s'établissant entre les étages successifs des machines polytropiques permettent donc de réaliser des enrichissements en A et en B respectivement, lorsqu'on se dirige vers l'une ou l'autre des extrémités de la machine permettant de passer du composant B pur au composant A pur.

Selon l'invention, on alimente le processus avec un mélange $\Delta m_A + \Delta m_B$ dénommé "la charge", en introduisant celle-ci dans un étage médian de la machine polytropique, et on recueille aux extrémités de celle-ci les débits $\Delta m_A$ et $\Delta m_B$ purs.

Ainsi, une machine polytropique alimentée

au niveau d'un étage par le mélange $\Delta m_A + \Delta m_B$ comporte une combinaison de trois parties :

- l'étage d'alimentation
- le module de rectification
- le module d'épuisement.

Dans ces trois parties, les débits vapeur et liquide circulant entre deux étages successifs ont des structures différentes.

Dans le module de rectification, les débits de B vapeur et liquide sont sensiblement identiques et la différence des débits de A vapeur et liquide vaut $\Delta m_A$.

Dans le module d'épuisement, les débits de A sont sensiblement identiques dans la vapeur et le liquide ; la différence des débits de B liquide et vapeur vaut $\Delta m_B$.

L'étage d'alimentation reçoit la charge $\Delta m_A + \Delta m_B$, la vapeur sortant de cet étage est dirigée vers un étage d'extrémité du module de rectification, en sens inverse, le liquide entrant dans l'étage d'alimentation provient du même étage d'extrémité ; la structure de ces débits vapeur et liquide est celle du module de rectification. De même, la vapeur entrant dans l'étage d'alimentation provient d'un étage d'extrémité de module d'épuisement ; en sens inverse, le débit liquide introduit dans le module d'épuisement provient de l'étage d'alimentation ; la structure de ces débits vapeur et liquide est celle du module d'épuisement.

Les effluents vapeur et liquide sont en équilibre dans chaque étage par contact direct (voir figure 1), et compte tenu des conditions de pression-température régnant dans l'étage considéré, les effluents qui quittent cet étage sont dans un état correspondant à cet équilibre. Il existe ainsi des

relations entre les débits circulant entre étages successifs,les valeurs de $\Delta m_A$ et $\Delta m_B$ et les concentrations dans ces étages correspondant aux pressions-températures qui y règnent.

Dans le module de rectification, entre deux étages successifs d'ordre i et i + 1, on a la relation :

$$\frac{M_A}{\Delta m_A} = \frac{y\,Ai\ (1 - xAi + 1)}{yAi\ -\ x\,Ai + 1} \qquad (a)$$

où $M_A$ = débit vapeur

$\Delta m_A$ = débit de la charge en constituant A

xAi+1 = concentration liquide de A dans l'étage de rang i + 1

$y_{Ai}$ = concentration vapeur de A dans l'étage de rang i

Dans le module d'épuisement entre deux étages successifs de rang j et j + 1, on a la relation

$$\frac{M_B}{\Delta m_B} = \frac{xBj + 1(1- yBj)}{xBj + 1 - yBj} \qquad (b)$$

où $M_B$ = débit liquide

$\Delta m_B$ = débit de la charge en constituant B.

$x_{Bj+1}$ = concentration liquide de B dans l'étage de rang j + 1.

$y_{Bj}$ = concentration vapeur de B dans l'étage de rang j.

En appliquant les deux relations (a) et (b) au niveau de l'étage d'alimentation, du côté module d'épuisement, et du côté module d'alimentation, on voit que la concentration qui s'établit dans ledit étage d'alimentation est la même que dans la charge.

En appliquant les relations (a) et (b) au module de rectification au niveau de l'étage d'extrémité non contigu à l'étage d'alimentation, et dénommé "dernier étage", on voit qu'il sort de cet étage d'extrémité un débit $M_A^*$ de vapeur de A tel que

$M_A^* > \Delta\ m_A$, la différence $M_A^* - \Delta\ m_A$ constituant un débit supplémentaire qu'on doit, d'après les règles de fonctionnement des machines polytropiques, réintroduire à l'état liquide dans le même étage ; on dénomme alors ce débit le "reflux de A".

En appliquant les relations (a) et (b) au module d'épuisement, au niveau de l'étage d'extrémité non contigu à l'étage d'alimentation, et au "premier étage", on voit qu'il sort de ce premier étage un débit $M_B^*$ de liquide de B tel que $M_B^* > \Delta\ m_B$, la différence $M^*_B - \Delta\ m_B$ constituant un débit supplémentaire qu'on doit, d'après les règles de fonctionnement des machines polytropiques, réintroduire à l'état vapeur dans le même étage ; on dénomme ce débit "reflux de B".

Selon des dispositions complémentaires caractéristiques du procédé suivant l'invention, le processus de démélange est combiné à trois autres processus avec lesquels il échange de la chaleur sous la forme de chaleur latente du composant A.

Le premier de ces processus dénommé processus associé a pour objet d'échanger la chaleur avec le fluide binaire (A,B) dans les différents étages du processus de démélange, de façon telle que la chaleur soit apportée au fluide binaire se vaporisant, par le composant A vapeur se condensant, et qu'elle soit enlevée au fluide binaire se condensant pour être fournie au composant A liquide se vaporisant.

Selon l'invention, la chaleur pour les échanges est apportée par le flux de vapeur de A s'échappant du dernier étage du processus de démélange, porteur de la chaleur latente d'un débit qui comprend à la fois la production $\Delta\ m_A$ et le reflux de A. La demande de chaleur du processus de démélange est égale à la chaleur d'évaporation du même débit

"production $\Delta m_A$ + reflux de A", diminuée de la chaleur de condensation du reflux vapeur de B ; l'apport total de chaleur dans le processus de démélange est donc en excès, par rapport à la demande, d'une quantité égale à la chaleur de condensation du reflux de B augmentée du travail apporté au système et des irréversibilités thermodynamiques ; on voit donc que le flux de A sortant du processus associé est encore porteur de cet excès de chaleur sous forme de chaleur latente de sa vapeur.

Le flux de A est alors introduit dans le deuxième processus qui est un processus bouilleur du débit liquide supplémentaire de B, la vapeur de B ainsi produite constitue le débit de reflux vapeur de B.

Le flux de A sortant est encore porteur d'une chaleur latente légèrement supérieure au travail fourni au système ; il est donc nécessaire de condenser un débit vapeur de A dans un troisième processus, dénommé processus de condensation de A et évacuant la chaleur en excès vers l'extérieur. Selon l'invention, ce processus est interposé sur le circuit vapeur de A connecté avec l'étage d'extrémité au plus bas niveau de température du processus associé.

Selon des caractéristiques complémentaires du procédé suivant l'invention, des dispositions sont prises pour que les échanges qu'on vient de décrire s'effectuent dans des conditions aussi proches que possible de la réversibilité. La description qui suit, faite en référence à la figure 2, illustre de telles caractéristiques.

La figure 2 est un diagramme analogue à celui de la figure 1, où l'on a représenté les concentrations vapeur et liquide à l'équilibre en fonction de la pression et de la température ; ce

diagramme permet de mettre en évidence des trajets représentatifs d'évolutions possibles des conditions dans les étages successifs d'un processus de démélange ; le point représentatif du premier étage de ce processus est toujours le point Z ; les points $Z_1$, $Z_2$.... etc $Z_5$ sont représentatifs du dernier étage ; le trajet $ZZ_1$ est à pression croissante et isotherme ; le trajet $ZZ_2$ est à pression et température croissantes ; le trajet $ZZ_3$ est à pression croissante et température décroissante ; le trajet $ZZ_4$ est à pression constante et température décroissante; le trajet $ZZ_5$ est à pression et température décroissantes.

Les dispositions caractéristiques du procédé selon l'invention sont applicables dans tous les cas.

Dans le trajet $ZZ_1$, le processus de démélange est isotherme ; les échanges entre le fluide binaire et le composant A sont réalisés dans des échangeurs ; l'écart de température d'échange entre la vapeur de A et le fluide binaire est obtenu en comprimant ladite vapeur de A avant son introduction dans les échangeurs ; celui à établir entre le liquide A et le fluide binaire est obtenu au moyen d'une détente "flash" du condensat de A.

On a représenté schématiquement à la figure 3 un système illustratif pour la mise en oeuvre du procédé de l'invention dans le cas du trajet isotherme $ZZ_1$. Dans un tel processus, l'ensemble des étages se trouve sensiblement à la même température. On voit à la figure 3 que le système comporte essentiellement un module d'épuisement 10, un module de rectification 11 et un étage 12 d'introduction du mélange $\Delta m_A + \Delta m_B$.

L'étage d'introduction 12 est en relation avec le module de rectification 11 par l'intermédiaire

des tubulures 13 (vapeur) et 14 (liquide) et avec le module d'épuisement 10 pour les tubulures 15 (vapeur) et 16 (liquide).

Dans le module de rectification 11, la vapeur de B est progressivement condensée de sorte qu'il ne reste plus que du composant A sensiblement pur , tant dans la vapeur que dans le liquide au niveau du dernier étage ; l'enrichissement du mélange (tant vapeur que liquide) résulte également de la vaporisation de A ; si dans un étage la chaleur mise en jeu pour la condensation de B l'emporte sur celle de vaporisation de A, cet étage est exothermique ; dans le module de rectification 11, certains étages peuvent être exothermiques, en principe, les autres étant endothermiques ; pratiquement, le module de rectification 11 est presque toujours exothermique dans tous ses étages. Du dernier étage (indice n) du module 11, il sort en 17 un débit $M_A^*$ du composant A pur à l'état vapeur, avec $M^*_A = \Delta m_A + m_{An}$, $m_{An}$ étant le débit supplémentaire qu'on introduit à l'état liquide dans le même étage en 18.

Dans le module d'épuisement 10, le titre du composant B tant vapeur que liquide augmente sans cesse quand on se déplace de l'étage d'introduction 12 jusqu'au premier étage. Au niveau du premier étage, il sort en 19 un débit $M^*_B$ du composant B pur avec $M^*_B = m_{B1} + \Delta m_B$, $m_{B1}$ étant le débit supplémentaire qu'on réintroduit à l'état vapeur en 20. Dans tous les étages du module 10, on vaporise en même temps A et B. Ainsi, le module d'épuisement 10 est endothermique au niveau de tous ses étages. Il va sans dire que, lorsque, dans la présente description, on parle de composant A sensiblement pur, ledit composant A se trouve à un état de pureté contrôlée, qui peut atteindre la pureté maximale

admise dans une opération industrielle.

On a représenté à la figure 4 un système isotherme du type illustré schématiquement à la figure 3, et comportant les moyens pour condenser le débit $M_{An}$, les moyens pour vaporiser le débit $m_{B1}$ ainsi que les moyens pour maintenir les modules 10 et 11 à température constante.

On supposera, à titre non limitatif, que le module de rectification 11 est exothermique ; le module d'épuisement 10 est de toutes façons endothermique. Les cas où le module 11 serait tout ou partie endothermique répondent au même enseignement général et sont à la portée de l'homme de l'art.

A la figure 4, les mêmes organes ou moyens sont affectés des mêmes signes ou chiffres de référence qu'à la figure 3.

Le débit $M^*_A$ sortant en 17 du module de rectification 11 est comprimé dans au moins un compresseur 21 avant d'être introduit en 23 par la ligne 22 dans le module d'épuisement 10. La température de condensation de la vapeur $M^*_A$ s'élève, créant ainsi le $\Delta$ T d'échange. Le débit traverse alors le module 10 (trajet 23-24) en se condensant en partie ; les dispositions sont prises au niveau des échangeurs (condenseurs de A, bouilleur du mélange A, B) pour que l'écart de température $\Delta T$ soit maintenu sensiblement constant ; le module d'épuisement 10 est donc bien à température constante. Le mélange diphasique de A arrive ensuite dans une capacité 29, où la vapeur et le liquide se séparent.

De son côté, le débit liquide $M^*_B$ s'échappant en 19 du module 10 est séparé en deux parties :

- le débit $\Delta m_B$ qu'on collecte dans la ligne 25 et qui constitue la production de B.

- le débit $m_{B1}$ qu'on véhicule par la conduite 26 et auquel on fait traverser l'échangeur 27. Après avoir traversé l'échangeur 27, le débit $m_{B1}$ sous forme vapeur est réintroduit en 20 dans le module 10. Le fluide d'échange dans l'échangeur 27 est la vapeur de A. L'échangeur 27 est donc un condenseur de A et un bouilleur de B. A cet effet, la vapeur de A provenant de la capacité 29 est véhiculée par la ligne 29a, traverse l'échangeur 27 et circule ensuite dans la ligne 31.

Le débit $m_{B1}$ est évaporé dans sa totalité au cours de son passage dans l'échangeur 27, avant d'être introduit par la ligne 28 sous forme de vapeur dans le premier étage du module 10 au niveau de 20.

Le débit de A sortant de l'échangeur 27 par la ligne 31 n'est pas totalement condensé ; on le fait passer alors dans le condenseur atmosphérique 30 d'où il ressort totalement liquide. Il est véhiculé dans la conduite 32 pour être introduit dans la capacité 29 qui est la réserve générale de A liquide à la température de fonctionnement isotherme du système.

De la réserve 29, on extrait un débit liquide dont une partie $m_{An}$ est renvoyée par la canalisation 33, 34 jusqu'en 18 dans le module de rectification 11, l'autre partie passe par la canalisation 33, 35 en traversant une vanne 36 de laminage-flash qui a pour objet de faire chuter sa température de $\Delta T'$, au-dessous de la température du système, créant ainsi l'écart de température d'échange. Le flux de A traverse le module de rectification 11 en y enlevant la chaleur et s'y vaporisant ; la vapeur de A produite en 37 est alors comprimée en 38 pour rejoindre par la ligne 39

le circuit de vapeur matérialisé par la ligne 22.

A titre illustratif, on a représenté à la figure 5 un dispositif faisant application des dispositions illustrées aux figures 3 et 4. Dans l'exemple choisi, le module d'épuisement 11 comprend deux étages ou cellules 50, 51 et le module de rectification 10 comprend trois étages ou cellules 52, 53,54. L'étage d'introduction est désigné par la référence 12, comme dans les figures 3 et 4.

Dans le module 11, les cellules d'échange 50 et 51 sont reliées par une tubulure 55 avec vanne 56 de laminage-flash. Entre l'étage 12 et l'étage 51 est également prévue une vanne 57 sur la tubulure 16. De même, entre les étages du module de rectification 10 sont prévus des moyens (vannes) de laminage sur le trajet vapeur, respectivement 58 sur la tubulure 14 entre l'étage 12 et l'étage 52,une vanne 59 entre les étages 52 et 53 et une vanne 60 entre les étages 53 et 54. Aux divers étages sont associés, de manière connue, des compresseurs. Ainsi un compresseur 61 est prévu entre les étages 50 et 51, un compresseur 62 est prévu entre les étages 51 et 52, un compresseur 63 entre les étages 12 et 52, un compresseur 64 entre les étages 52 et 53 et un compresseur 65 entre les étages 53 et 54. On a matérialisé par des traits fins et par des flèches les trajets de la vapeur entre les divers étages et les compresseurs correspondants.

Le compresseur 21 est prévu à la sortie 17 du module 10 de rectification comme déjà illustré aux figures 3 et 4.

Les trajets du liquide sont représentés en traits forts.

Les circuits d'échange dans les étages 50 et 51 du module 11 sont désignés respectivement par

les références 66 et 67. Les circuits d'échange dans les étages 52, 53 et 54 du module 10 sont désignés respectivement par les références 68, 69 et 70.

On trouve par ailleurs à la figure 5 les mêmes éléments qu'aux figures 3 et 4, désignés par les mêmes références. Il n'y a donc pas lieu de les décrire à nouveau en détail , leur fonction ayant déjà été illustrée. Tout au plus a-t-on représenté un réservoir-tampon additionnel 71 monté sur la ligne 35 alimentant le dernier étage du module 11. La figure 5 correspond à une réalisation concrète d'un système isotherme fonctionnant selon la courbe théorique $ZZ_1$ du graphique de la figure 2.

Pour les systèmes polytropiques non isothermes, le processus de démélange est à températures étagées. Le schéma d'ensemble du système est identique à celui de la figure 3, mais, dans ce cas, les états successifs qu'on rencontre en se déplaçant du premier étage vers le dernier correspondent sur le graphique de la figure 2 (diagramme d'équilibre liquide-vapeur) aux trajets $ZZ_2$, $ZZ_3$, $ZZ_4$ et $ZZ_5$. Les trajets sont représentés à la figure 2 en suivant les états du liquide, mais il est clair pour l'homme de l'art que l'état de la vapeur se déduit d'un point quelconque lu sur ce trajet sur la courbe homologue représentative de l'état vapeur à la même température.

Dans tous les trajets autres que le trajet isotherme $ZZ_1$,le processus de démélange est à températures étagées. Le processus associé est un processus polytropique,comportant le même nombre d'étages que le processus de démélange, les étages de même rang étant homologues dans les deux processus, les étages dénommés "premier" et "dernier" du processus associé étant homologues des étages de même nom du processus de démélange, chaque étage de rang i à température $T_i$ du processus de démélange échangeant de la chaleur avec son

homologue du processus associé à température $T'_i$, l'écart de température $T_i-T'_i$ étant positif si le compartiment des échanges du fluide binaire est condenseur, négatif s'il est bouilleur.

On illustrera maintenant comment ces différentes caractéristiques définissent le fonctionnement des systèmes par les différents trajets de la figure 2 autres que le trajet isotherme $ZZ_1$.

On indiquera maintenant par quels moyens $M_A$* est condensé, $M_{B1}$ est évaporé, et comment les températures successives des étapes sont maintenues aux valeurs prescrites par les trajets envisagés. La description qui suit sera faite, pour simplifier, dans le cas d'une machine idéale.

Ainsi qu'on l'a mentionné précédemment, le système selon l'invention consiste essentiellement en une association du processus polytropique de démélange, dénommé processus principal, avec un autre processus polytropique fonctionnant avec le composant A comme fluide de travail et qui sera dénommé processus associé. Le processus associé comporte le même nombre d'étages que le processus principal ; les étages successifs des deux processus étant homologues dans l'association considérée, deux étapes homologues échangeant la chaleur de façon à être à la même température (ou du moins à maintenir à une valeur adéquate leur différence de température, qui est l'écart de température d'échange).

La figure 6 est un schéma théorique illustrant la combinaison, selon l'invention, d'un processus principal et d'un processus associé. Le processus principal est illustré par le bloc 100, avec son module de rectification 110, son module d'épuisement 111 et son étage 112 d'introduction de la charge $\Delta m_A + \Delta m_B$.

Le processus associé est représenté par le bloc 200. Ainsi qu'on l'a vu à la figure 3, le processus principal 100 fournit en 117 (dernier étage du module de rectification) un débit $M^*_A$ vapeur, avec $M^*_A = m_{An} + \Delta m_A$, tandis que le débit $m_{An}$ est réintroduit en 118. Par ailleurs, il sort en 119 du premier étage du module d'épuisement un débit $M^*_B$ liquide, et on réintroduit en 120 un débit $m_{B1}$ (vapeur). Selon l'invention, le débit $M^*_A$ sortant en 117 du processus 100 est introduit en 201 dans le processus associé 200. Ce même processus 200 doit restituer en 202 un débit liquide égal à $m_{An}$, ce débit étant alors véhiculé par la conduite 203 pour être introduit en 118. La différence des débits vapeur et liquide à l'extrémité 201, 202 du processus associé 200 s'écrit $M^*_A - m_{An} = \Delta m_{An}$.

A l'autre extrémité du processus 200, il sort en 204 un débit vapeur $m_{A1} + \Delta m_A$ et il entre en 205 un débit liquide $m_{A1}$. Pour la clarté de l'exposé, on n'a représenté à la figure 6 que la circulation du fluide A. On a également illustré de façon schématique par les flèches $f_1, f_2 \ldots f_n$, la correspondance entre les étages respectifs du processus principal 110 et du processus associé 200, les correspondances des niveaux de température à chaque étage étant illustrées par les températures $\theta_1 \longleftrightarrow \theta'_1, \quad \theta_2 \longleftrightarrow \theta'_2 \ldots\ldots \theta_n \longleftrightarrow \theta'_n$ .

A la figure 7, on a complété la représentation schématique de la figure 6 en faisant intervenir le liquide B et d'autres éléments nécessaires aux échanges thermiques dans le système. A la gauche de la figure 7, on voit un échangeur 127 dans lequel circulent d'une part du composant A provenant de la sortie 204 du processus associé 200 par la ligne 180 et d'autre part du composant B

provenant de la sortie 119 du processus principal 100 par la ligne 126. Le composant A traverse l'échangeur 127 en se condensant partiellement et est récupéré dans la conduite 131. La quantité $m_{B1}$ du composant B traversant l'échangeur 127 s'y évapore totalement et sort par la ligne 128 pour être réintroduite dans le processus principal en 120.

On voit également un condenseur atmosphérique 130 dans lequel est achéminé, par la conduite 131, le flux biphasique du composant A sortant de l'échangeur 127. Le composant A vapeur s'y condense totalement. On récupère dans la conduite de sortie 132, d'une part la production $\Delta m_A$ du composant A (ligne 181) et d'autre part le débit $m_{A1}$ qui est réintroduit par la conduite 182 à l'entrée 205 du processus associé 200. On a matérialisé par la flèche Q' les rejets thermiques du système. La production $\Delta m_B$ de B est récupérée dans la ligne 125.

Les dispositions décrites en référence à la figure 7 conviennent si dans le processus principal 100, la température $\theta_1$ dans le premier étage est inférieure à celle $\theta_n$ du dernier étage, c'est-à-dire si ce processus 200 est à température croissante : les rejets thermiques Q' sont alors évacués dans l'atmosphère à la température la plus basse du processus. Dans le cas contraire, c'est-à-dire quand la température bas niveau se trouve du côté du dernier étage du processus 200, il faut adopter la disposition illustrée à la figure 8.

Les éléments communs aux figures 7 et 8 portent les mêmes signes de référence. On voit à la figure 8 que le composant A (débit vapeur $m_{A1}$) provenant de la sortie 204 du processus associé 200, passe dans la conduite 180, traverse l'échangeur 127 et est recyclé (débit liquide $m_{A1}$) à l'entrée 205 du

même processus 200.Le fluide B d'échange est, comme dans le cas de la figure 7, prélevé à la sortie 119 (débit $M^*_B$) du processus principal 100, passe, après prélèvement de la production $\Delta m_B$ de B dans la conduite 125, dans la conduite 126 et traverse l'échangeur 127 en s'évaporant totalement, pour être renvoyé (débit vapeur $m_{B1}$) par la ligne 128 à l'entrée 120 du processus 100.

Le condenseur atmosphérique 130,situé à la droite du dessin sur la figure 8, reçoit par la conduite 185 le débit total de A soit $M^*_A = m_{An} + \Delta m_A$ sortant en 117 du processus principal 100. A la sortie du condenseur 130, on récupère en 181 la production $\Delta m_A$ de A et on renvoie par la conduite 186 à l'extrémité 201 du processus associé 200 un débit $m_{An}$.

On décrira et illustrera maintenant les systèmes correspondant de manière précise aux trajets $ZZ_2$, $ZZ_3$, $ZZ_4$ et $ZZ_5$ (voir figure 2). Brièvement, ces trajets correspondent aux situations suivantes pour la machine polytropique de démélange, laquelle met en oeuvre le processus polytropique principal :

trajet $ZZ_2$ = machine à compresseurs, refroidie, à températures croissantes.

trajet $ZZ_3$ = machine à compresseurs, réchauffée, à températures décroissantes.

trajet $ZZ_4$ = machine isobare (cas de la colonne à distiller classique) à températures décroissantes.

trajet $ZZ_5$ = machine à turbines, réchauffée, à températures décroissantes.

On décrira séparément les systèmes correspondant à ces divers trajets.

TRAJET $ZZ_2$

Le processus principal est à pression et température croissantes du premier au dernier étage ; le processus associé est un processus à turbines; le processus de condensation de A est interposé sur le circuit vapeur de A sortant du premier étage du processus associé, en série avec le processus bouilleur de B ; le flux de A sortant de ces deux processus est liquide et on peut en prélever la production $\Delta m_A$ de A ; on retourne le reste dans le premier étage du processus associé. La différence entre le débit vapeur de A sortant du premier étage du processus associé et le débit liquide de A y entrant est donc $\Delta m_A$ ; conformément à l'invention polytropique, cette différence est bien conservée au dernier étage dudit processus. En effet, ce dernier reçoit la totalité du débit sortant du processus de démélange et n'évacue que le débit supplémentaire ($m_A$) du composant A liquide. La différence est donc bien $\Delta m_A$, qui est la production de A.

Pour faciliter l'exposé, on a représenté à la figure 9 la machine polytropique principale fonctionnant selon l'invention, avec le mélange A et B comme fluide de travail, à la figure 10 la machine polytropique associée fonctionnant avec le fluide A seul comme fluide de travail et à la figure 11, la combinaison de ces deux machines, laquelle est le système polytropique mettant en oeuvre le processus de type $ZZ_2$.

Il est inutile de revenir en détail sur la machine de la figure 9, qui est du type général répondant à la représentation schématique de la figure 3. Quant à la constitution proprement dite d'une telle machine, l'homme de l'art pourra se référer, si besoin est, aux brevets antérieurs mentionnés au début de la présente description. La

machine est du type suite à compresseurs, refroidie, et comprend donc un certain nombre d'étages ou cellules d'échange $E_1$, $E_2$,....$E_i$,.....$E_n$ communiquant entre eux aussi bien par la phase liquide que par la phase vapeur. Le fluide de travail est le mélange binaire A + B. Les températures et pression vont en croissant du premier étage $E_1$ au dernier étage $E_n$. Les compresseurs $K_1$, $K_2$,...$K_i$..., $K_n$ sont reliés à chaque étage comme représenté à la figure 9 et le flux vapeur du mélange binaire A + B circule dans cette suite de compresseurs. Les flux liquides individuels passent d'étage en étage avec interposition d'une vanne de laminage-flash $V_1$, $V_2$.....$V_{n-1}$.

On a représenté schématiquement en $F_1$, $F_2$,... $F_i$,..$F_n$, les faisceaux d'échange qui, selon l'invention , appartiennent à la machine associée (figure 10).

Globalement, il entre dans le compresseur $K_1$ du premier étage $E_1$ un débit vapeur égal à $m_{B1}$ du fluide B. Il sort du premier étage $E_1$ un débit liquide $M^*_B$ du fluide B, avec $M^*_B = m_{B1} + \Delta m_B$, comme cela a été expliqué précédemment.

Au niveau du dernier étage $E_n$, il sort du compresseur $K_n$ un débit vapeur du composant A égal à $M^*_A$, avec $M^*_A = m_{An} + \Delta m_A$, et il entre à l'état liquide un débit $m_{An}$.

A la figure 10, on a représenté schématiquement la machine polytropique associée qui est une suite à turbines, refroidie. Elle comprend une suite d'étages $E'_1$, $E'_2$....$E'_i$....$E'_n$ avec leurs turbines correspondantes $T_1$, $T_2$....$T_i$....$T_n$. Le flux vapeur du composant A passe successivement dans les turbines, en se refroidissant, le débit $M^*_A$ étant introduit à l'état vapeur dans la dernière turbine $T_n$. Chaque étage communique également avec les

étages voisins par la phase liquide du composant A, comme représenté schématiquement par les circuits comprenant les vannes de laminage-flash $V'_1$, $V'_2$,... $V'_i$....$V'_{n-1}$. Il entre dans le premier étage $E'_1$ un débit liquide égal à $m_{A1}$ et il sort du dernier étage un débit liquide $m_{An}$. On récupère à la sortie du premier étage un débit total $m_{A1} + \Delta m_A$.

Conformément à l'invention, les machines polytropiques des figures 9 et 10 sont associées comme représenté à la figure 11.

A chaque étage $E_1$, $E_2$,....$E_i$....$E_n$ de la machine polytropique avec compresseurs à fluide binaire correspond respectivement un étage $E'_1$, $E'_2$.. $E'_i$....$E'_n$ de la machine polytropique avec turbines à fluide A comme fluide de travail.

L'effluent de la première turbine est véhiculé par la conduite 380 à travers un échangeur 327 qui a la même fonction que l'échangeur 127 de la figure 7. A la sortie de l'échangeur 327, le fluide A condensé partiellement passe dans la conduite 331 puis dans le condenseur atmosphérique 330, qui a la même fonction que le condenseur 130 de la figure 7. A la sortie du condenseur 330, on récupère la production $\Delta m_A$ dans la conduite 381 et on réintroduit un débit $m_{A1}$ par la conduite 382 dans le premier étage $E'_1$. Par ailleurs, le débit du composant B sortant du premier étage $E_1$ est pour partie conduit en 325 pour fournir la production $\Delta m_B$ et le reste est envoyé par la conduite 326 dans l'échangeur 327, où il se vaporise totalement avant d'être réintroduit par la conduite 328 dans le premier étage $E_1$.

Au niveau des derniers étages $E_n$, $E'_n$, le débit $m_{An}$ liquide provenant de $E'_n$ est introduit en 318 dans $E_n$ et le débit vapeur $M^*_A$ sortant en 317

de $E_n$ est envoyé dans le compresseur $K_n$.

TRAJET $ZZ_3$

Le processus principal est toujours à pression croissante du premier au dernier étage, mais cette fois à température décroissante, le processus associé est alors un processus à compresseurs ; le processus de condensation de A reçoit un débit vapeur $m'_A$, porteur des rejets thermiques du système, provenant du dernier étage du processus de démélange ; on extrait du débit liquide sortant du processus de condensation de A la production $\Delta m_A$, le reste, soit $m'_A - \Delta m_A$, est retourné dans le dernier étage du processus de démélange ; de son côté, le dernier étage du processus associé a reçu le débit vapeur de A égal à $m_A + \Delta m_A - m'_A$ ; la différence des débits vapeur et liquide de A, qui est nulle au premier étage, se conserve, et il sort du dernier étage du processus associé un débit liquide de A qui vaut également $m_A + \Delta m_A - m'_A$ ; ce débit est envoyé dans le dernier étage du processus de démélange, lequel reçoit au total le débit liquide $m_A$.

On a représenté à la figure 12 le schéma du processus associé et à la figure 13 le système polytropique correspondant au trajet $ZZ_3$. Le processus principal, qui fonctionne avec le mélange A + B comme fluide de travail, est le même que celui représenté à la figure 9. On ne décrira pas en détail les éléments de ces machines, qui sont identiques à ceux décrits précédemment, notamment en référence aux figures 9 à 11. On a, bien entendu, adopté sur tous les dessins la même présentation pour montrer ces éléments. Il est suffisant à l'homme de l'art de voir les entrées et sorties de fluides.

Ainsi, à la figure 12, on voit la suite à compresseurs $K'_1$, $K'_2$....$K'_i$....$K'_n$ correspondant respectivement à des étages $E'_1$, $E'_2$....$E'_i$....$E'_n$. Au niveau du premier étage $E'_1$, il rentre un débit du composant A liquide égal à $m_{A1}$ et il sort un débit vapeur égal à $m_{A1} + \Delta m_A$. Au nivau du dernier étage, il sort de $E'_n$ un débit $m_{An}$ liquide et le compresseur $K'_n$ est alimenté par un débit vapeur $m_{An} + \Delta m_A$ soit $M^*_A$.

La figure 13 représente le système selon l'invention. On voit la machine polytropique du processus principal, qui comprend les étages $E_1$, $E_2$...$E_i$....$E_n$ avec les compresseurs $K_1$, $K_2$...$K_i$...$K_n$ et la machine de la figure 12, qui lui est associée avec ses étages respectifs $E'_1$, $E'_2$....$E'_i$....$E'_n$ et la suite de compresseurs $K'_1$, $K'_2$....$K'_i$...$K'_n$. La figure 13 montre également l'échangeur 427 et le condenseur atmosphérique 430. Les liaisons entre ces éléments sont représentées au dessin et celui-ci fait partie intégrante de la présente description. Les entrées et sorties de fluide sont également illustrées au dessin.

<u>TRAJET $ZZ_4$</u>

Le processus principal est à pression constante ; le processus associé est un processus à compresseurs ; le processus de condensation de A reçoit un débit vapeur $m'_A$, porteur des rejets thermiques du système, provenant du dernier étage du processus de démélange ; on extrait la production $\Delta m_A$ du débit liquide sortant du processus de condensation de A, le reste, soit $m'_A - \Delta m_A$, est retourné dans le dernier étage du processus de démélange ; de son côté, le dernier étage du processus associé a reçu le débit vapeur de A égal à $m_A + \Delta m_A - m'_A$ ; la différence des débits vapeur

et liquide de A, qui est nulle au premier étage, se conserve, et il sort du dernier étage du processus associé un débit liquide de A qui vaut également $m_A + \Delta m_A - m'_A$ ; ce débit est envoyé dans le dernier étage du processus de démélange ; ce dernier reçoit donc bien au total le débit liquide $m_A$.

Le système pour la mise en oeuvre d'un tel processus est représenté à la figure 14. On a représenté la machine polytropique principale sous forme d'une colonne à distiller 500 avec ses étages ou plateaux $E_1$, $E_2$....$E_i$...$E_n$. La machine associée est une suite à compresseurs comprenant des étages $E'_1$, $E'_2$....$E'_i$...$E'_n$ avec compresseurs $K'_1$, $K'_2$...$K'_i$... $K'_n$. On a également représenté l'échangeur 527 et le condenseur atmosphérique 530. Le dessin illustre clairement les entrées, sorties et circulations de fluides et il fait partie intégrante de la présente description.

TRAJET $ZZ_5$

Le processus principal est à pression et température décroissantes, c'est un processus à turbines ; le processus associé est un processus à compresseurs ; le processus de condensation de A reçoit un débit vapeur $m'_A$, porteur des rejets thermiques du système provenant du dernier étage du processus de "démélange" ; on extrait la production $\Delta m_A$ du débit liquide sortant du processus de condensation de A, le reste, soit $m'_A - \Delta m_A$, est retourné dans le dernier étage du processus de démélange ; de son côté, le dernier étage du processus associé a reçu le débit vapeur de A égal à $m_A + \Delta m_A - m'_A$ ; la différence des débits vapeur et liquide de A, qui est nulle au premier étage, se conserve, et il sort du dernier étage du processus associé un débit liquide de A qui vaut également $m_A$

+ $\Delta m_A - m'_A$ ; ce débit est envoyé dans le dernier étage du processus de démélange, ce dernier reçoit donc bien au total le débit liquide $m_A$.

Les figures 15 à 17 illustrent un tel système.

La figure 15 représente schématiquement la machine polytropique principale avec ses étages $E_1$, $E_2 \ldots E_i \ldots E_n$ et les turbines correspondantes $T_1$, $T_2 \ldots T_i \ldots T_n$.

La figure 16 représente schématiquement la machine associée, qui est une suite à compresseurs fonctionnant avec le composant A comme fluide de travail. On voit les étages $E'_1$, $E'_2 \ldots E'_i \ldots E'_n$ et les compresseurs correspondants $K'_1$, $K'_2 \ldots K'_i \ldots K'_n$. On a prévu également un condenseur 550 qui reçoit le débit vapeur $m_{A1}$ sortant du premier compresseur $K'_1$ et le condense totalement pour l'introduire liquide dans le premier étage $E'_1$.

La figure 17 représente la combinaison, selon l'invention, des machines représentées individuellement aux figures 15 et 16. On retrouve les étages $E_1$, $E_2$, $E_i \ldots E_n$ avec leurs turbines $T_1$, $T_2 \ldots T_i \ldots T_n$, auxquels sont associés respectivement les étages $E'_1$, $E'_2 \ldots E'_i \ldots E'_n$ avec leurs compresseurs $K'_1$, $K'_2 \ldots K'_i \ldots K'_n$. On voit également l'échangeur 627 et le condenseur atmosphérique 630, dont les fonctions ont été décrites précédemment. Les entrées, sorties et circulations de fluides apparaissent clairement à la figure 17, qui fait partie intégrante de la présente description.

Les trajets $ZZ_1$(isotherme), $ZZ_2$, $ZZ_3$, $ZZ_4$ (isobare) et $ZZ_5$ sont les plus communs dans la pratique. Toutefois, l'invention s'applique également à des processus plus complexes, dont les trajets représentatifs peuvent comporter des maxima,

des minima, ou des lignes brisées. De tels trajets complexes peuvent se décomposer en trajets individuels déjà décrits précédemment.

Il va sans dire également que les considérations ci-dessus ont été faites pour faciliter l'exposé en raisonnant sur des machines idéales fonctionnant sans pertes. Dans la pratique, il faut bien entendu tenir compte de ces pertes, ainsi qu'il est bien connu de l'homme de l'art.

L'invention procure un procédé ne mettant en oeuvre que des opérations réversibles, du moins si l'on se réfère au processus idéal. Si l'on applique le premier principe de la thermodynamique au système global, on trouve que le travail W introduit est égal à la chaleur rejetée Q, Q = W.

Ce travail représente le travail minimal de démélange.

Si l'on applique le deuxième principe de la thermodynamique, en supposant, pour être rigoureux, que les produits séparés $\Delta m_A$ et $\Delta m_B$ sont portés à la température d'introduction du mélange par échange avec le processus, de façon qu'il n'y ait pas de flux de chaleur sensible à travers le processus, le flux d'entropie à travers l'ensemble du système est nul puisque le processus est par hypothèse réversible. On peut donc écrire la relation :

$$\Delta S_{mél.} - \Delta S\ ther. = 0$$

où $\Delta S_{mél}$ est l'entropie de mélange de l'échantillon $\Delta m_A + \Delta m_B$.

et $\Delta$ S ther. est tel que $Q = T_o \times \Delta S\ ther.$ avec $T_o$ = température bas niveau du processus.

On aura donc :

$$W = T_o \times \Delta S_{mél.}$$

$\Delta S\ mél$ étant une grandeur attachée au produit

à démélanger ; la relation ci-dessus indique que les travaux des processus qu'on a décrits précédemment diffèrent entre eux du fait de la température de rejet $T_o$.

Toutes les considérations précédentes s'appliquent aux cas où les courbes d'équilibres liquide-vapeur sont celles de mélanges obéissant sensiblement aux lois des solutions idéales ; ce sont alors des courbes en fuseau semblables à celles de la figure 1. Par exemple, lorsqu'on se déplace sur le diagramme de Z à $Z_1$ (figure 2), on voit la pression augmenter.

Si, comme le représente la figure 18, les courbes d'équilibre présentent un minimum tel que Z' (cas d'un mélange azéotropique) le trajet $Z_oZ'_1$ comprend alors deux parties.

Le trajet $Z_oZ'$ reste à pressions croissantes.

Le trajet $Z'Z'_1$ est à pressions décroissantes.

Le système pour la mise en oeuvre d'un tel procédé, qui résulte de la combinaison de deux processus individuels, peut comprendre un premier processus avec suite de compresseurs, tel qu'illustré à la figure 9, et un deuxième processus avec suite de turbines, tel qu'illustré à la figure 15, les deux processus fonctionnant avec le mélange binaire A + B comme fluide de travail.

Le point d'introduction du mélange peut se situer indifféremment par rapport au point de pontage de ces deux processus. Par exemple,il se situera (figure 19) dans la suite de compresseurs.

La figure 19 est un exemple schématique de machine dont le fonctionnement correspond au trajet $Z_oZ'Z'_1$. Le premier processus, avec suite à compresseurs, est représenté par le bloc 700 et le deuxième, avec suite à turbines, par le bloc 701. L'interface

de jonction des deux processus est illustré par la ligne X-Y en traits mixtes. Le mélange $\Delta m_A + \Delta m_B$ est introduit à l'étage $E_i$ du processus 700. Globalement, le module d'épuisement est matérialisé en 702 et le module de rectification en 703.

Pour que le fonctionnement du système soit bien stable, on pourra créer une discontinuité franche de concentrations en A, entre le dernier étage du processus 700 et le premier étage du processus 701, en injectant dans celui-ci un petit débit de composant A pur.

Il va sans dire que l'invention n'est pas limitée par la description qui précède et que de nombreuses variantes peuvent lui être apportées sans sortir de son cadre. Des processus polytropiques ont été illustrés à l'aide d'exemples. L'invention s'applique cependant à des processus polytropiques quelconques permettant la rectification de mélanges binaires les plus variés, tels que des mélanges d'eau et de composés organiques liquides, par exemple de méthanol et des mélanges d'hydrocarbures.

Application pratique d'un processus isobare

Dans la description qui suit, on a illustré l'application pratique d'un système du type représenté à la figure 14, à savoir d'un processus isobare. Pour permettre une description aisée, on a repris sous une autre forme la figure 14 et on a illustré ce système à la figure 20. On a représenté côte à côte la colonne de rectification (processus principal) et le processus associé (PAC). La colonne et la PAC sont graduées du haut vers le bas ; deux points à la même hauteur sont à la même température. Le dessin de la figure 20 fait partie intégrante de la présente description et l'on y retrouve les circulations de fluides et caractérisations des grandeurs thermodynamiques déjà décrites. Toutes ces notions sont bien

accessibles à l'homme de l'art et ne nécessitent pas un développement complémentaire.

Pour que le fonctionnement corresponde pleinement au schéma idéal, on a fait en sorte que les composants A et B liquides purs ressortent à la température T*, où ils sont entrés à l'état de mélange.

Au dessin, les flux vapeur sont affectés de l'exposant v̲ et les flux liquides de l'exposant l̲. On soutire en tête de colonne le débit vapeur de A, soit $m_A + \Delta m_A$. Le débit $\delta m_A$ est celui dont la chaleur latente correspond au rejet thermique. Il importe donc de le condenser en tête de colonne. Les calculs s'en trouvent simplifiés.Il en résulte l'organisation générale des débits qui apparaît à la figure 20.

La relation exprimant que le flux d'entropie à travers la colonne est nul (puisque son fonctionnement est réversible) s'écrit :

$$(m_A + \Delta m_A)\, S''_A(T) - m_A S'_A(T) - (\Delta m_A - \delta m_A) S'_A(T) + (\Delta m_A - \delta m_A)\, S'_A(T^*) + \Delta m_B\, S'_B(T^*) - \Delta m_A S'_A(T^*) - \Delta m_B S'_B(T^*) - \Delta S^* + (m_B + \Delta m_B) S'_B(T') - \Delta m_B\, S'_B(T') - m_B S''_B(T') + \Delta S_{th} = 0$$

En appliquant à la colonne le deuxième principe de la thermodynamique on obtient la relation (1) :

$$(1)\quad [\,m_A^{(+)} + \Delta m_A\,]\ \frac{L_A(T)}{T} + \delta m_A\, c_{\ell A} \log\left(\frac{T}{T^*}\right) - m_B\ \frac{L_B(T')}{T'} + \Delta S_{th.} - \Delta S^* = 0$$

où $\Delta S^*$ est le flux d'entropie de mélange

$\Delta S_{th.}$ est le flux d'entropie ayant pour origine des échanges de chaleur réversibles.

Conformément au premier principe de la thermodynamique, le bilan enthalpique à travers la

colonne s'exprime par la relation (2) :

$$(2)\quad [m_A^{(+)} + \Delta m_A] L_A(T) - \delta m_A C\ell_A(T^*-T) - m_B L_B(T') + Q_1 = 0$$

Pour la PAC, le deuxième principe s'exprime par la relation (3)

$$(3)\quad -[\bar{m}_A^{(+)} + \delta m_A] \frac{L_A(T)}{T} + M'_A \frac{L_A(T')}{T'} + \delta m_A C\ell_A \, \mathrm{Log}\left(\frac{T^*}{T'}\right) - \Delta S_{th} = 0$$

Le premier principe , appliqué à la PAC, s'écrit :

$$(4)\quad -[m_A^{(T)} + \delta m_A] L_A(T) + M'_A L_A(T) + \delta m_A C\ell_A [T^* - T'] - Q_1 - W = 0$$

En ajoutant les relations (1) et (3) d'une part, et, (2) et (4) d'autre part, on obtient les deux relations :

$$W = [\Delta m_A - \delta m_A] L_A(T) = T \, \Delta S^*$$

Enfin, les chaleurs échangées au condenseur obéissent à la relation :

$$M'_A L_A(T') = m_B L_B(T')$$

Les relations des concentrations à l'équilibre ($xA(T)$, $yA(T)$, etc...) en fonction de T étant connues, on en déduit :

- dans le module de rectification

$$m_A = \Delta m_A x_A \frac{1 - y_A}{y_A - x_A}$$

$$M_A = \Delta m_A \frac{y_A(1 - x_A)}{y_A - x_A} \qquad m_B = m_A \left(\frac{1 - x_A}{x_A}\right)$$

- dans le module d'épuisement :

$$m_B = \Delta m_B \, y_B \frac{1 - x_B}{x_B - y_B}$$

$$M_B = \Delta m_B \frac{x_B(1 - y_B)}{x_B - y_B}$$

$$m_A = \frac{y_A}{1 - y_A} \quad m_B$$

L'ensemble des relations ci-dessus permet donc la détermination du travail de démélange, c'est-à-dire du travail nécessaire à la séparation des composants A et B du mélange, lorsqu'on utilise les moyens de l'invention.

En demeurant dans l'application d'un processus isobare, on donnera maintenant des indications concrètes pour le calcul du nombre d'étages de la colonne, en vue d'une réalisation pratique.

On a montré à la figure 21, une construction géométrique qui facilite une telle détermination. On rappellera tout d'abord la relation (a) mentionnée précédemment qui est applicable au module de rectification entre deux étages successifs d'ordre $\underline{i}$ et $\underline{i+1}$.

$$\frac{M_A}{m_A} = \frac{y_{Ai}\,(1 - x_{Ai+1})}{y_{Ai} - x_{Ai+1}} \qquad (a)$$

Cette relation peut s'écrire également

$$\frac{y_{Ai} - x_{Ai+1}}{1 - x_{Ai+1}} = \frac{y_{Ai}}{OB} = tg\ \alpha \qquad (a')$$

Comme l'illustre le graphique de la figure 21, la construction du point i + 1 à partir du point i est la suivante :

- on trace une horizontale passant par i pour déterminer le point A,
- on porte la longueur $OB = \frac{M_A}{\Delta m_A}$ que l'on choisit,
- on joint A à B pour déduire le point C depuis lequel on remonte à i + 1.

On en déduit un moyen de déterminer graphiquement le rapport

$\left(\frac{M_A}{\Delta m_A}\right)$ mini qu'on aurait avec une infinité de plateaux.

A partir du $\left(\frac{M_A}{\Delta m_A}\right)$ mini, on peut choisir le $\left(\frac{M_A}{\Delta m_A}\right)$ réel, par exemple en écrivant :

$$\left(\frac{M_A}{\Delta m_A}\right) \text{réel} = (1 + K) \times \left(\frac{M_A}{\Delta m_A}\right) \text{mini} \quad (K > 0)$$

En maintenant K constant dans la construction de i + 1 en fonction de i de proche en proche, on peut ensuite, au moyen de plusieurs constructions successives, établir une relation entre K et le nombre de plateaux. On peut ainsi déterminer le nombre utile de plateaux.

Dans le module d'épuisement, on a la relation :

$$\frac{m_B}{\Delta m_B} = y_{Bi} \quad \frac{1 - x_{Bi+1}}{x_{Bi+1} - y_{Bi}}$$

$$\frac{M_B}{\Delta m_B} = \frac{x_{Bi+1}(1-y_{Bi})}{x_{Bi+1} - y_{Bi}} = \frac{y_{Ai}(1 - x_{Ai+1})}{y_{Ai} - x_{Ai+1}}$$

Il s'agit donc de la même expression que précédemment.

Pour construire les points représentatifs des étages successifs, on utilise la même construction que précédemment, mais en portant :

$$OB = \frac{M_B}{\Delta m_B}$$

Les considérations et les calculs ci-dessus ont été appliqués au cas de la séparation de deux

corps voisins, le propane et l'isobutane et au cas de la séparation de deux corps chimiquement éloignés, l'eau et le méthanol.

EXEMPLE 1 - séparation de propane et d'isobutane (processus isobare)

L'exemple choisi est celui d'un mélange :
1 kg de propane + 1 kg d'isobutane, liquide à 40°C.

Le propane est le composant A et l'isobutane le composant B.

Les débits sont calculés à partir des courbes d'équilibre liquide-vapeur pour p = 10 bars.

Ces débits sont représentés aux figures 22a, 22b respectivement pour les composants A et B.

On peut suivre à la figure 22a le débit liquide de A depuis la tête de colonne : on renvoie le reflux $m_A = 0,7$ ; une petite partie se vaporise entre 26,3° et 40° : le débit passe à 0,66 ; il est alors renforcé par 1 kg de charge (1,66) ; en se vaporisant totalement de 40° à 67,3°, il passe à 0 ; en sens inverse le débit vapeur part de 0 à 67,3°, atteint 1,66 à 40°, et 1,7 à 26,3°.

A la figure 22b, le reflux de B à l'état vapeur est émis en pied de colonne (67,3°) ; de 67,3° à 40°, il est nourri par une petite vaporisation du liquide qui descend; il atteint 0,66 à 40° puis décroît jusqu'à 0 à 26,3° ; en sens inverse, la phase liquide se constitue de 26,3° à 40°, passant de 0 à 0,66 à 40°, où elle est renforcée d'une unité par la charge (1,66) ; elle décroît ensuite légèrement pour atteindre 1,55 en pied de colonne.

Connaissant l'évolution des débits, on peut alors calculer la chaleur échangée le long de la colonne, en intégrant tranche par tranche, selon la relation (5)

$$Q_{col} = \int_T^{T'} \left[ \frac{dm_A}{dT} L_A(T) + \frac{dm_B}{dT} L_B(T) + m_A(C'_A - C''_A) - m_B(C'_B - C''_B) \right] dT$$

ainsi que le flux d'entropie passant de la PAC vers la colonne, selon la relation (6).

$$\Delta S_{th} = \int_T^{T'} \left[ \frac{dm_A}{dT} \cdot \frac{L_A(T)}{T} + \frac{dm_B}{dT} \cdot \frac{L_B(T)}{T} + \frac{m_A(C'_A - C''_A) - m_B(C'_B - C''_B)}{T} \right] dT$$

Portant alors $Q_{col}$ dans (2), on tire $\delta m_A$, puis portant $\delta m_A$ et $\Delta S_{th}$ dans (3), on obtient $M'_A$ ; enfin, en portant $\delta m_A$, $M'_A$ et $Q_{col}$ dans (4), on obtient le travail W.

On trouve, pour les principales grandeurs, les valeurs numériques suivantes :

$M_A$(26,3°) = 1,7 kg/s (débit sortant en tête)

$M_A L_A$ (26,3°) = 497 kW (chaleur latente)

$m_A$ (26,3°) = 0,7 kg/s (reflux)

$M'_A$(67,3°) =0,64 kg/s

$M_B$(67,3°) = 0,56 kg/s (reflux)

$m_B L_B$ (67,3°) = 143 kW (chaleur latente)

$Q_{col}$ = 400 kW.

Le travail de démélange W est

W = 46 kW

Le rapport $\frac{Q}{W}$ , Q étant la chaleur fournie par la PAC à l'ensemble "module d'épuisement + bouilleur de B", est désigné par l'abréviation CoP. On trouve

CoP = 750/46 = 16,3

EXEMPLE 2 - séparation de méthanol et d'eau (processus isobare)

L'exemple choisi est celui d'un mélange : 0,1 kg de méthanol (composant A) + 0,9 kg d'eau

(composant B) liquide à 92°C.

Les débits sont calculés à partir de la courbe d'équilibre liquide-vapeur, et sont respectivement représentés aux figures 23a et 23b.

Les calculs s'effectuent comme à l'exemple 1.

On trouve :

$M_A(64,5°) = 0,142$ kg/s (débit sortant en tête)

$M_AL_A\ (64,5°) = 159$ kW (chaleur latente)

$m_A\ (64,5°) = 0,042$ kg/s (reflux)

$M'_A\ (100°) = 0,236$ kg/s

$M_B\ (100°) = 0,108$ kg/s (reflux)

$m_BL_B\ (100°) = 244$ kW (chaleur latente)

$Q_{col} = -54,4$ kW

W = 27 kW (travail de démélange)

COP : $\frac{476}{27} \simeq 17,6$

Application pratique d'un processus isotherme

Le processus mis en oeuvre est du type général représenté à la figure 4.

A partir des courbes d'équilibre, on calcule les débits de A et B vapeur et liquide par les expressions :

- dans le module de rectification :

$$m_A = \Delta m_A \frac{x_A\ (1-y)_A}{y_A - x_A}$$

$$m_B = m_A \left( \frac{1}{y_A} - 1 \right)$$

- dans le module d'épuisement :

$$m_B = \Delta m_B \frac{x_A\ (1-y_A)}{y_A - x_A}$$

$$m_A = m_B \frac{y_A}{1 - y_A}$$

Le travail total des compresseurs a pour expression:

$$W_{comp} = \int_{P_o}^{P_1} \left[ m_A^{vap} \frac{dF_A}{F_A} + m_B^{vap} \frac{dF_B}{F_B} \right]$$

EXEMPLE 3 - Séparation de butane et de propane

propane = composant A

butane = composant B

La température de la machine est 40°C, les pressions extrêmes sont :

- pour $x_A = 0$ 5,25 bars
- pour $x_A = 1$ 13,92 bars

La pression de l'étage d'introduction ($x_A = 0,5$) est p = 10 bars.

Les débits sont calculés à partir des courbes d'équilibre. Les résultats sont rassemblés aux figures 24a et 24b qui font partie de la description.

Le calcul du travail donne :

W = 42 kW.

EXEMPLE 4 - séparation du méthanol et de l'eau

méthanol : composant A

eau : composant B

composition : $x_A = 0,1, x_B = 0,9$

Les pressions extrêmes sont :

$x_A = 0$ $P_o = 0,4738$ bar

$x_A = 1$ $P_1 = 1,696$ bar

$$\frac{P_1}{P_o} = 3,6.$$

pression à l'étage d'introduction P = 0,65 bar.

Les débits de méthanol ($m_A$) et d'eau ($m_B$) évoluent comme l'indiquent les figures 25a et 25b, qui font partie de la description.

Le travail a pour valeur W = 25 kW.

Calculs de colonne conventionnelle (comparaison)

Les calculs ont été faits en supposant que

le nombre de plateaux est infini et que les produits A et B sont extraits à l'état pur. Le schéma de la figure 26 illustre les notations utilisées. On a utilisé des grandeurs molaires, rapportées au cas où 1 mole par seconde sort en tête de colonne. Les notations adoptées sont les suivantes :

$\frac{1}{R+1}$ = effluent en tête de colonne.

$\frac{R}{R+1}$ = rétrogradation liquide en tête de colonne.

$L_{n-1}$ = rétrogradation liquide qui s'écoule du plateau de rang n-1

$V_n$ = courant de vapeurs montant du plateau de rang n

$m_o$ = soutirage liquide en fond de colonne.

En écrivant les bilans-matières et le bilan thermique, respectivement pour $\Sigma$ r (module de rectification) et $\Sigma_e$(module d'épuisement), on obtient les relations:

$$\frac{y_n - 1}{x_{n-1} - 1} = \frac{H_n - P}{h_{n-1} - P} = \frac{L_{n-1}}{V_n} \ ; \ \frac{x_p}{y_p} = \frac{h_p - P_o}{H_{p-1} - P_o} = \frac{V_{p-1}}{L_p}$$

Application à l'échantillon propane-butane

Le mélange butane-propane est introduit dans la colonne à la température de 40°C.

Pour cette température, la courbe d'équilibre liquide-vapeur donne les valeurs :

$x_A = 0,55$ et $y_A = 0,752$

Ces valeurs permettent le calcul des enthalpies au niveau du plateau d'alimentation :

$h_{al} = 1,75$ kW ; $H_{al} = 16,28$ kW

En portant les points ($x_A$, $h_{al}$) et ($y_A$, $H_{al}$) sur un graphique,et en traçant la droite qui les relie, on lit les ordonnées :

$P = 34$ kW et $P_o = - 38$ kW

De la valeur de P on tire :

$$\frac{1}{R + 1} = 0,433$$

qui est la fraction molaire de A extraite en tête de colonne. Les $m_o$ moles de B extraites en pied de colonne ayant la même masse que 0,433 mole de A, on en déduit :

$$m_o = 0,328$$

Connaissant les valeurs de $m_o$, $P_o$ et de l'enthalpie $h_o$ du liquide en pied de colonne, on peut calculer la quantité de chaleur fournie au rebouilleur :

$$Q = 14,43 \text{ kW}$$

pour une charge de 19,1 grammes de A et 19,1 grammes de B. Si la charge introduite par seconde dans la colonne comprend 1 kg de propane et 1 kg de butane, la chaleur Q à fournir au rebouilleur devient :

$$Q = 756 \text{ kW}$$

Application à l'échantillon méthanol-eau.

La charge étant introduite à la température de 92,2°, la courbe d'équilibre liquide-vapeur donne les valeurs :

$$x_A = 0,06 \text{ et } y_A = 0,324$$

Au niveau du plateau d'alimentation, les enthalpies prennent les valeurs :

$$h_{al} = 2,11 \text{ kW et } H_{al} = 40,55 \text{ kW}$$

En procédant comme dans l'exemple précédent on obtient :

$$\frac{1}{R + 1} = 0,253 \text{ et } m_o = 4,05$$

$$Q = 465,6 \text{ kW}$$

qui est la chaleur à fournir au rebouilleur, pour une charge, introduite par seconde dans la colonne, comprenant 0,1 kg de méthanol et 0,9 kg d'eau.

Les résultats de calcul ci-dessus ont été rassemblés dans le tableau ci-après :

| | propane i-butane | méthanol eau |
|---|---|---|
| température mélange incident | 40°C | 92,3°C |
| colonne conventionnelle-chaleur fournie (kW) | 756 | 465,6 |
| PAC POL* en assistance de colonne conventionnelle — $W_{méca}$(kW) | 91,1 | 44,4 |
| PAC POL* en assistance de colonne conventionnelle — COP | 8,3 | 10,5 |
| Wméca réversible (pour processus isotherme ou isobare)kW | 46 | 27 |
| COP de PAC POL* avec colonne polytropique (processus isobare) | 16,3 | 17,6 |

*PAC POL = système polytropique dans lequel la vapeur circule dans le sens des températures croissantes et où la différence des débits vapeur et liquide est nulle.

Selon l'invention , les COP respectifs sont:

propane-isobutane COP = 5

méthanol-eau COP = 6,5

Par rapport à une rectification par colonne classique, pour laquelle on fournit de la chaleur au bouilleur équivalent à 10 kW, une rectification par colonne classique, associée à une pompe à chaleur classique, selon l'art antérieur, implique une fourniture de travail mécanique de 4 kW. Selon l'invention, la rectification par colonne classique associée à une PAC POL consomme 2 kW,tandis que la rectification par colonne polytropique associée à une PAC POL consomme seulement 1 kW. Les avantages de l'invention sont donc très nets.

Parmi les processus polytropiques selon l'invention, on donne la préférence à ceux qui font appel au nombre minimum de composants mécaniques.

De ce point de vue, les processus préférés sont donc les processus isobare et isotherme qui ont été décrits en détail précédemment. Le système isobare peut comporter un nombre plus important de plateaux, mais il n'est pas nécessaire de prévoir un échangeur par plateau. On peut constituer des groupes de plateaux et leur associer un échangeur unique, de manière à réaliser un nombre limité d'échangeurs le long de la colonne plus faible que le nombre de plateaux.

Dans le cas d'un processus isotherme, il est nécessaire de prévoir un compresseur par plateau.

Lorsque les corps à séparer sont éloignés du point de vue chimique, un tel processus peut être avantageux car le nombre de plateaux est faible. En outre,il a pour intérêt de ne pas modifier la température du mélange en cours de rectification, ce qui peut être très intéressant dans le cas de corps sensibles à la température.

D'une façon générale, on soulignera que l'invention, pour obtenir le même résultat qu'un procédé de rectification conventionnelle, fait appel à une colonne comportant moins de plateaux que dans la technique connue. De même, pour assurer une production de A et de B en quantités identiques, l'invention permet d'utiliser une colonne de diamètre inférieur.

Globalement, la colonne mise en oeuvre selon l'invention est donc plus fine et comporte moins de plateaux que les colonnes à rectifier conventionnelles.

Ainsi que l'homme de l'art le comprendra, la présente invention offre donc de nombreuses possibilités dans la rectification des mélanges binaires.

REVENDICATIONS

1. Procédé pour la rectification d'un mélange liquide de deux composants A et B, A étant le plus volatil, dans lequel on utilise un processus polytropique ouvert mettant en jeu un fluide de travail condensable, comportant une pluralité d'étages, dans chacun desquels le liquide et la vapeur dudit fluide sont en présence, les débits vapeur et liquide du fluide de travail circulant en sens inverse l'un de l'autre d'étage en étage, la différence entre les débits liquide et vapeur du fluide de travail circulant entre deux étages contigus étant conservée d'étage en étage jusqu'aux étages d'extrémité, processus dans lequel on peut mettre en jeu, au niveau de chaque étage, du travail et des échanges de chaleur avec un fluide caloporteur extérieur, ledit procédé étant caractérisé en ce qu'on utilise le mélange A + B à rectifier, comme fluide de travail dans le processus polytropique ouvert susmentionné dénommé processus principal dont les étages d'extrémité sont dénommés "premier étage" et "dernier étage", de façon telle qu'on passe du premier au dernier en suivant le sens de parcours de la vapeur dans ledit processus, et comportant une distribution de pressions-températures telle que dans le premier étage il n'y ait que du composant B pratiquement pur et dans le dernier étage que du composant A pratiquement pur, en ce que, dans l'étage où la concentration liquide est la plus proche de celle du mélange, on introduit la charge à rectifier, soit un mélange composé d'un débit $\Delta m_A$ du corps A et $\Delta m_B$ du corps B préalablement portée à la pression-température dudit étage, dénommé étage d'alimentation, les étages allant dans le sens croissant depuis l'étage d'alimentation

jusqu'au dernier étage étant dénommés étages de rectification et constituant ensemble un module de rectification, la différence des débits vapeur et liquide du constituant B étant sensiblement nulle dans le module de rectification tandis que la différence des débits vapeur et liquide du constituant A est égale à $\Delta m_A$ et se répercute d'étage en étage dans le module de rectification jusqu'au dernier, où l'on recueille un débit vapeur $\Delta m_A$ accompagné d'un débit vapeur supplémentaire $m^*_A$, en ce qu'on réinjecte, après condensation, le même débit $m^*_A$, dans le dernier étage, pour constituer le reflux de A, les étages allant dans le sens décroissant depuis l'étage d'alimentation jusqu'au premier étage, étant dénommés étages d'épuisement, et constituant ensemble un module d'épuisement, la différence des débits vapeur et liquide du constituant A dans le module d'épuisement étant sensiblement nulle, tandis que la différence des débits liquide et vapeur du constituant B est égale à $\Delta m_B$ et se répercute d'étage en étage dans le module d'épuisement jusqu'au premier, où l'on recueille un débit liquide $\Delta m_B$ accompagné d'un débit liquide supplémentaire $m^*_B$, en ce qu'on réinjecte, après vaporisation, le même débit $m^*_B$ dans le premier étage pour constituer le reflux de B, les débits vapeur $\Delta m_A$ au dernier étage et liquide $\Delta m_B$ au premier étage constituant la production.

2. Procédé selon la revendication 1, caractérisé en ce qu'on combine le processus polytropique principal avec trois autres processus d'échange de chaleur mettant en jeu de la chaleur latente du composant A et dénommés respectivement "processus associé", "processus d'ébullition de B", "processus de condensation de A", ledit processus associé

assurant les échanges avec le fluide binaire du processus principal de façon telle que les étages bouilleur et condenseur de celui-ci échangent leur chaleur respectivement avec du composant A vapeur se condensant, le liquide se vaporisant, ledit processus d'ébullition de B assurant la vaporisation du débit liquide de B supplémentaire $m^*_B$ en échangeant la chaleur avec un débit vapeur de A se condensant pour constituer le "reflux de B", ledit "processus de condensation de A" condensant la vapeur de A en rejetant à l'extérieur du système la chaleur correspondante, le débit vapeur de A sortant du dernier étage du processus principal circulant dans les trois processus, où il est condensé au total, les condensats donnant lieu à la production $\Delta m_A$ de A et au reflux liquide de A.

3. Procédé suivant la revendication 2, caractérisé en ce que le processus principal est à température constante, en ce que le processus associé est un processus d'échange entre le fluide A et le fluide binaire, en ce qu'on crée l'écart de température d'échange entre la vapeur de A et le fluide binaire en comprimant ladite vapeur de A avant son introduction dans le processus d'échange, et en ce qu'on crée l'écart de température d'échange entre le liquide A et le fluide binaire au moyen d'une détente-flash du condensat de A.

4. Procédé selon la revendication 2, caractérisé en ce que le processus principal est à températures variables, en ce que le processus associé est un processus polytropique, comportant le même nombre d'étages que le processus principal, les étages de même rang étant homologues dans les deux processus, les étages dénommés "premier" et

"dernier" du processus associé étant homologues des premier et dernier étages du processus principal, en ce que chaque étage de rang i à température Ti du processus principal, échange la chaleur avec son homologue du processus associé à température T'i, la valeur absolue de Ti-T'i étant l'écart de température d'échange, en ce que le débit vapeur de A sortant du dernier étage du processus principal est introduit dans le dernier étage du processus associé, en ce que le reflux de A liquide provient du dernier étage du processus associé, en ce que le processus d'ébullition de B est alimenté en vapeur de A par le premier étage du processus associé, en ce que le premier étage du processus associé est alimenté en liquide de A par le processus d'ébullition de B, en ce que le processus de condensation de A intervient sur le circuit vapeur de A relié à l'étage d'extrémité du processus associé côté basse température.

5. Procédé suivant la revendication 4, caractérisé en ce que le processus principal est à pression et température croissantes du premier au dernier étage, en ce que le processus associé est un processus à turbines, et en ce qu'on extrait les rejets thermiques du système en condensant de la vapeur de A sortant du premier étage du processus associé.

6. Procédé suivant la revendication 4, caractérisé en ce que le processus principal est à pression croissante et température décroissante, en ce que le processus associé est un processus à compresseurs, et en ce qu'on extrait les rejets thermiques du système en condensant de la vapeur de A sortant du dernier étage du processus associé.

7. Procédé suivant la revendication 4,

caractérisé en ce que le processus principal est à pression et température décroissantes, en ce que le processus associé est un processus à compresseurs, et en ce qu'on extrait les rejets thermiques du système en condensant de la vapeur de A sortant du dernier étage du processus associé.

8. Procédé suivant la revendication 4, caractérisé en ce que le processus principal est isobare, en ce que le processus associé est un processus à compresseurs, et en ce qu' on extrait les rejets thermiques en condensant de la vapeur de A sortant du dernier étage du processus associé.

9. Procédé selon l'une quelconque des revendications 1 à 8, caractérisé en ce que, pour un mélange binaire obéissant à des lois complexes se traduisant, sur le diagramme des pressions-températures en fonction des concentrations, par une courbe autre que les courbes en fuseau traditionnelles,on réalise une combinaison de processus polytropiques principaux individuels, chacun desdits processus correspondant à un trajet limité sur ladite courbe.

10. Procédé selon la revendication 9, caractérisé en ce qu'on traite un mélange azéotropique.

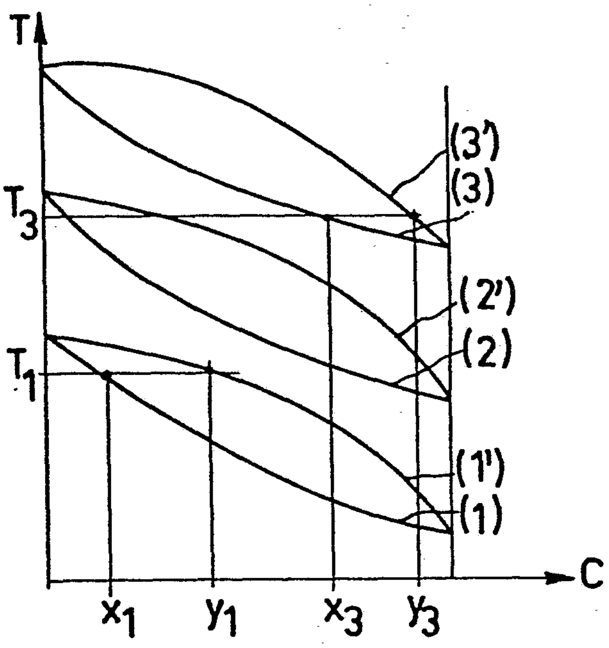


FIG.1

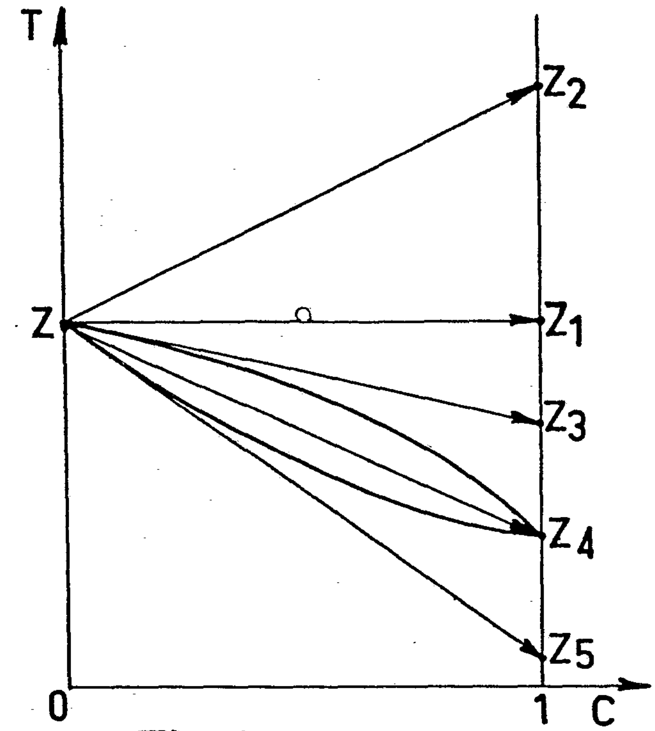


FIG.2

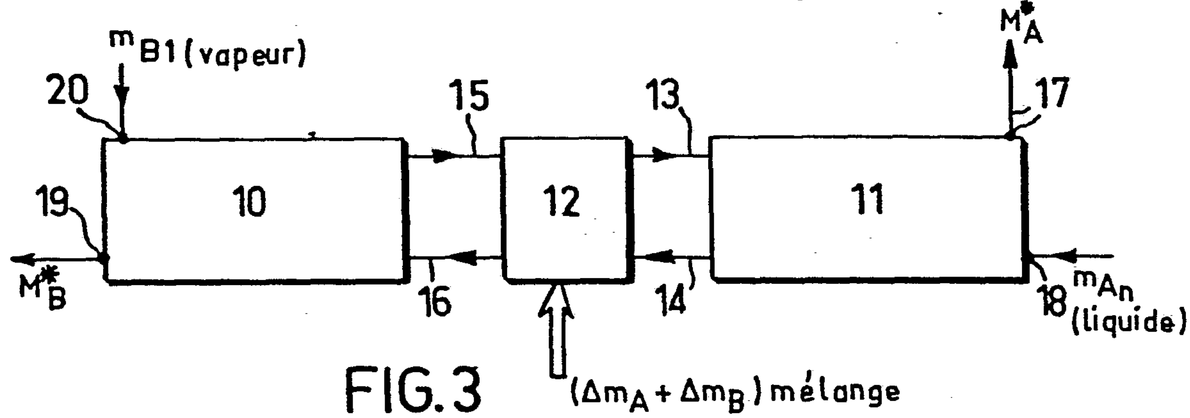


FIG.3

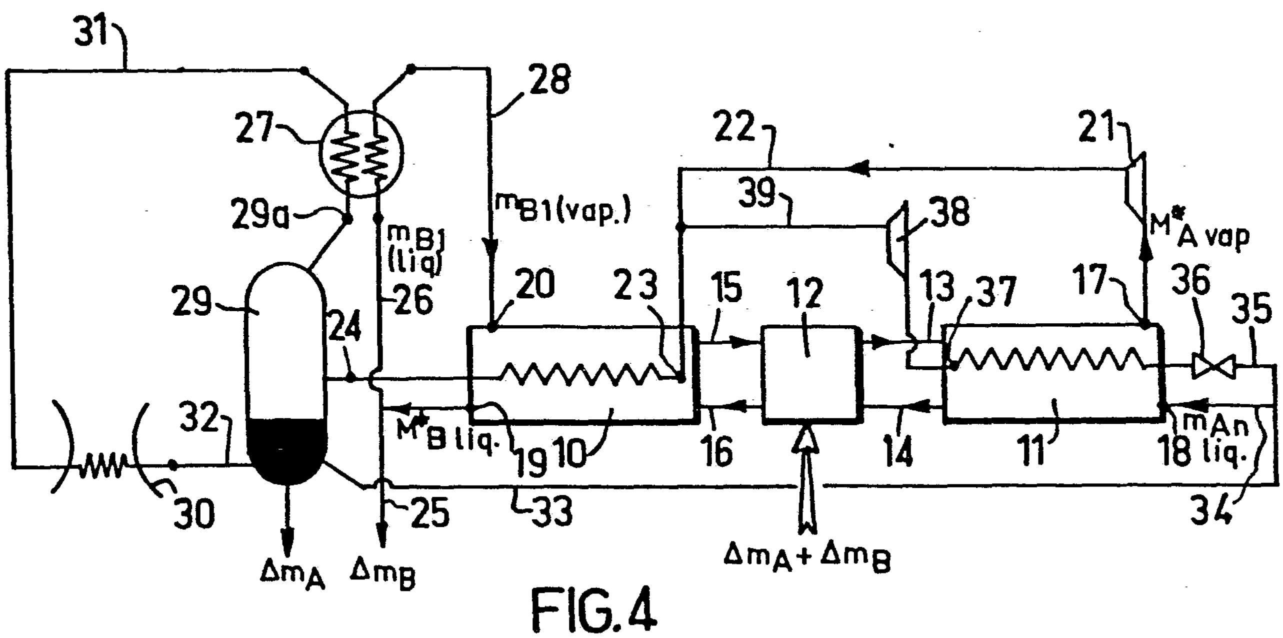


FIG.4

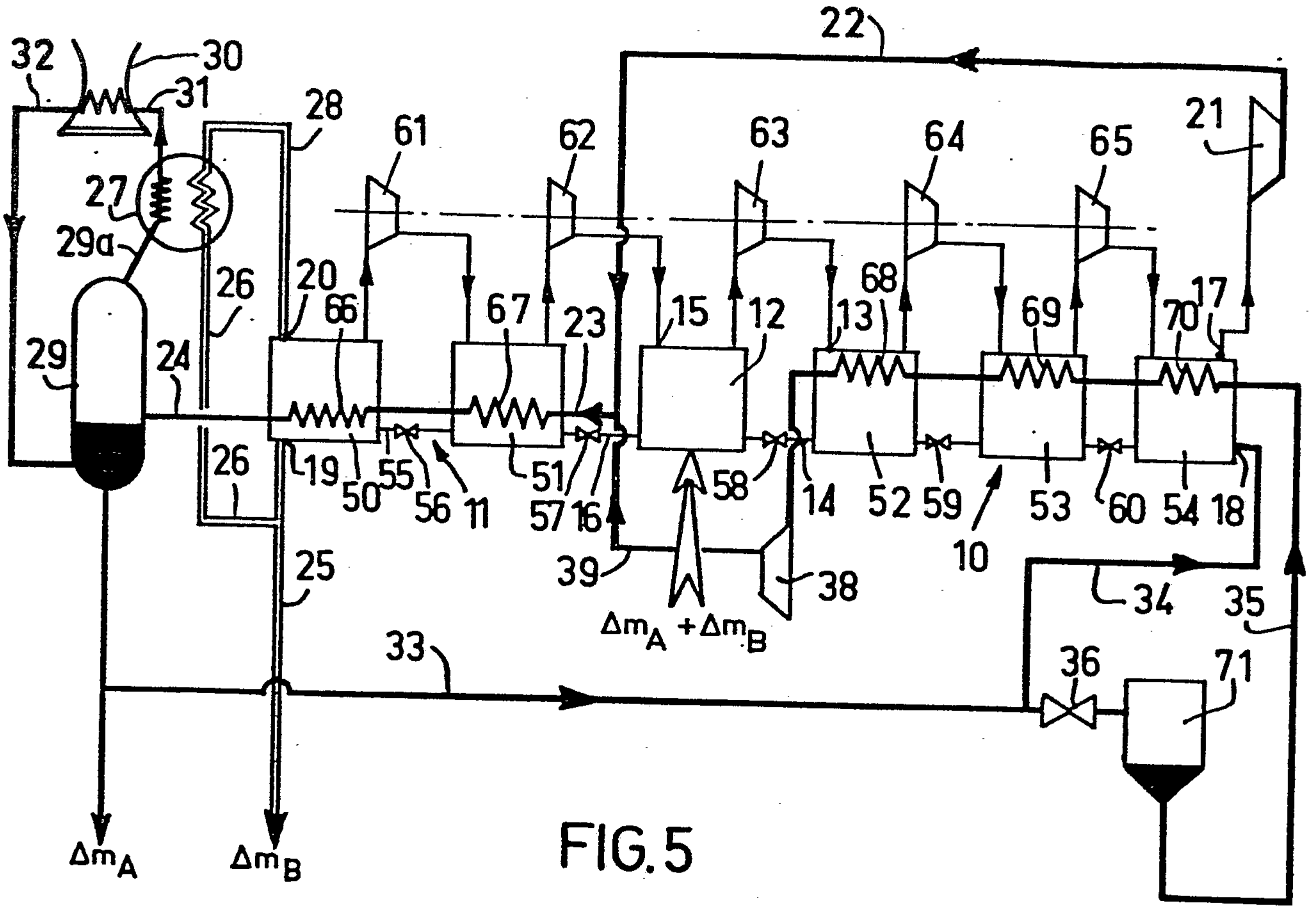
22
32
30
31
28
61
62
63
64
65
21
27
29a
26
20
66
67
23
15
12
13
68
69
70
17
29
24
19
50
55
56
11
51
57
16
58
14
52
59
53
60
54
18
10
39
38
25
34
35
33
36
71
Δm_A + Δm_B
Δm_A
Δm_B

FIG.5

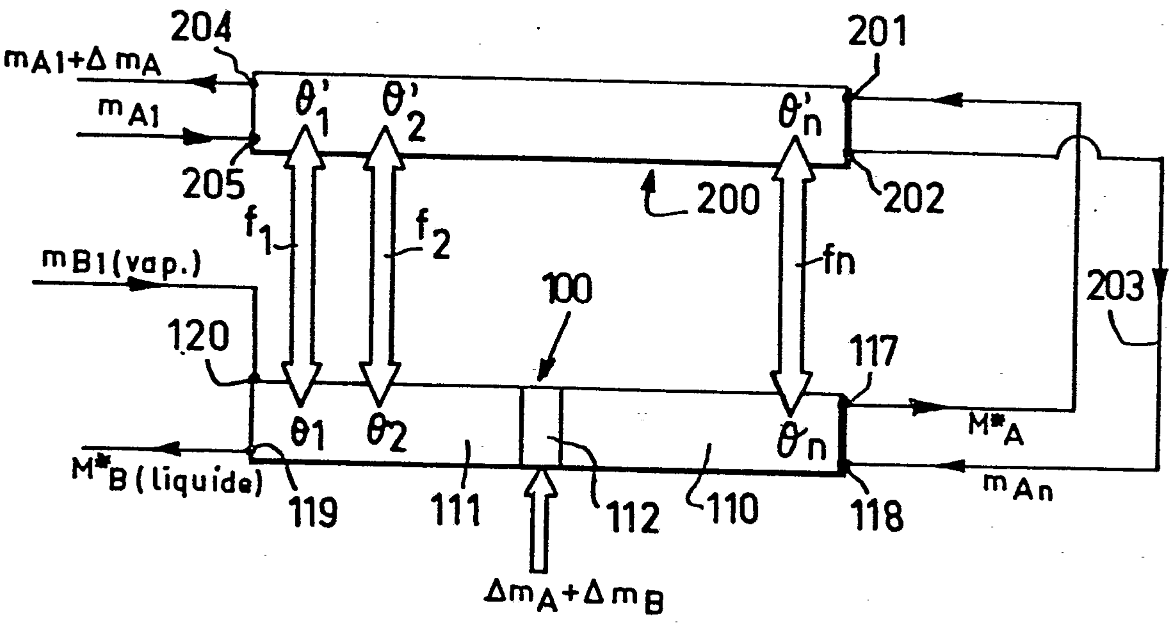
204
201
mA1+Δ mA
mA1
θ'1
θ'2
θ'n
205
200
202
f1
f2
fn
mB1(vap.)
100
203
120
117
θ1
θ2
θn
M*A
M*B (liquide)
119
111
112
110
118
mAn
ΔmA+Δ mB

FIG.6

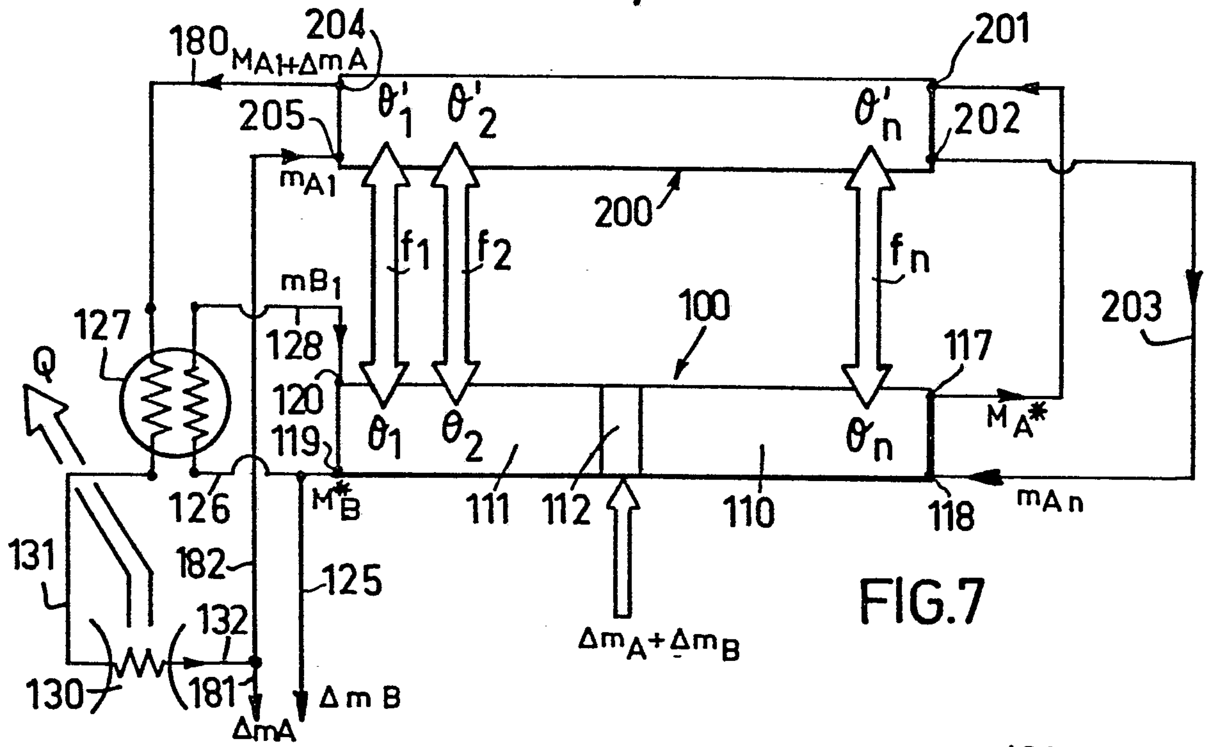


FIG.7

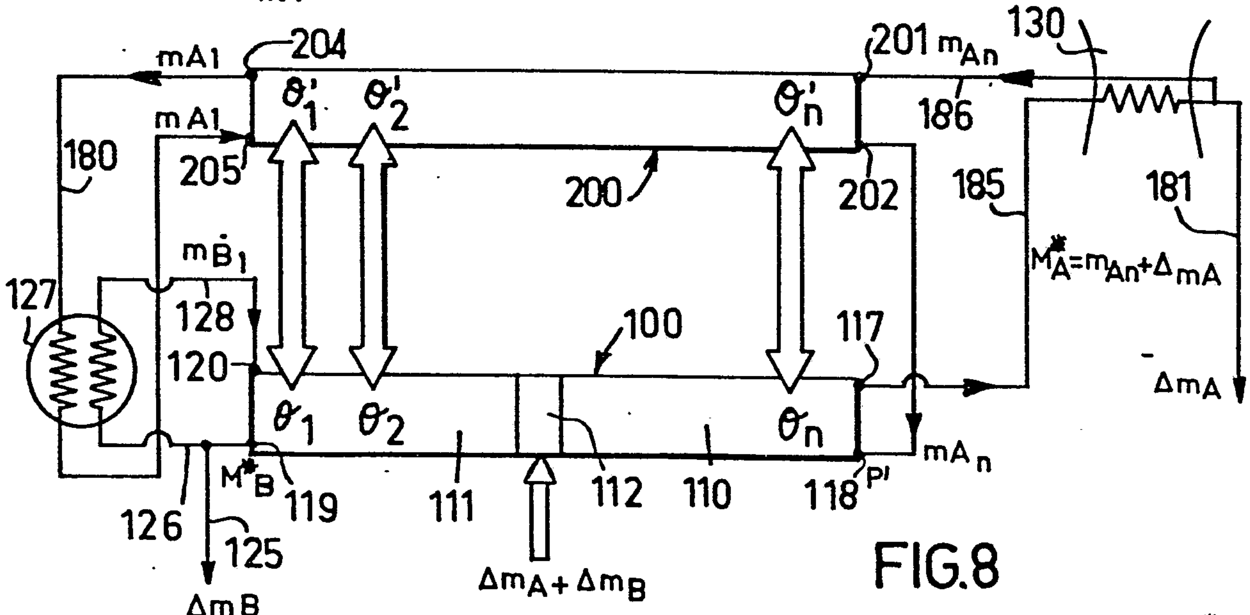


FIG.8

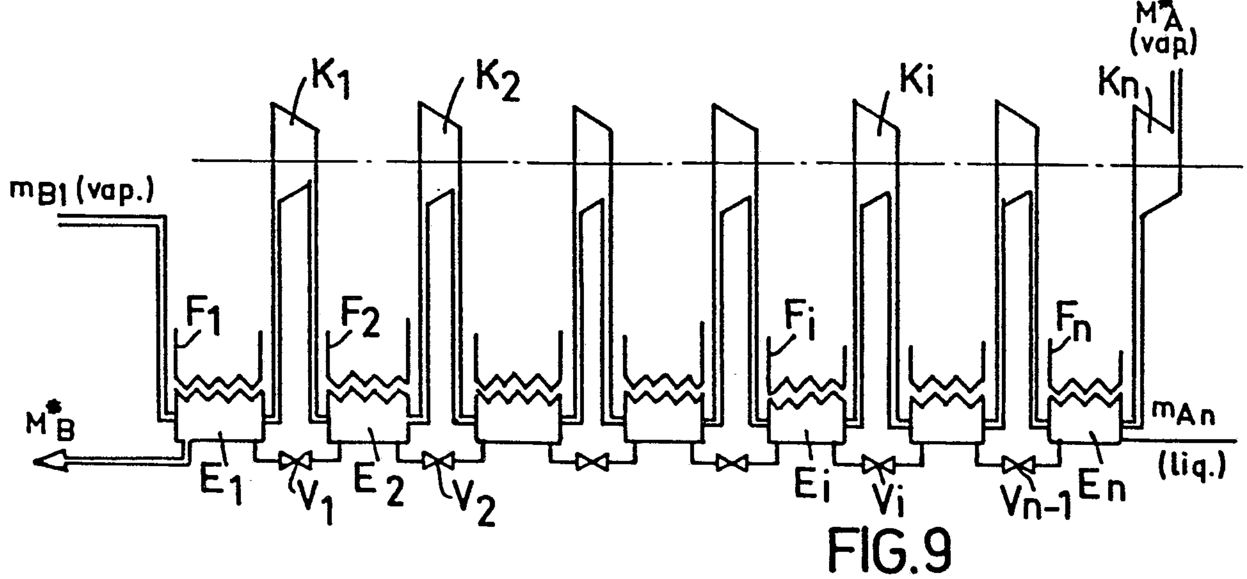


FIG.9

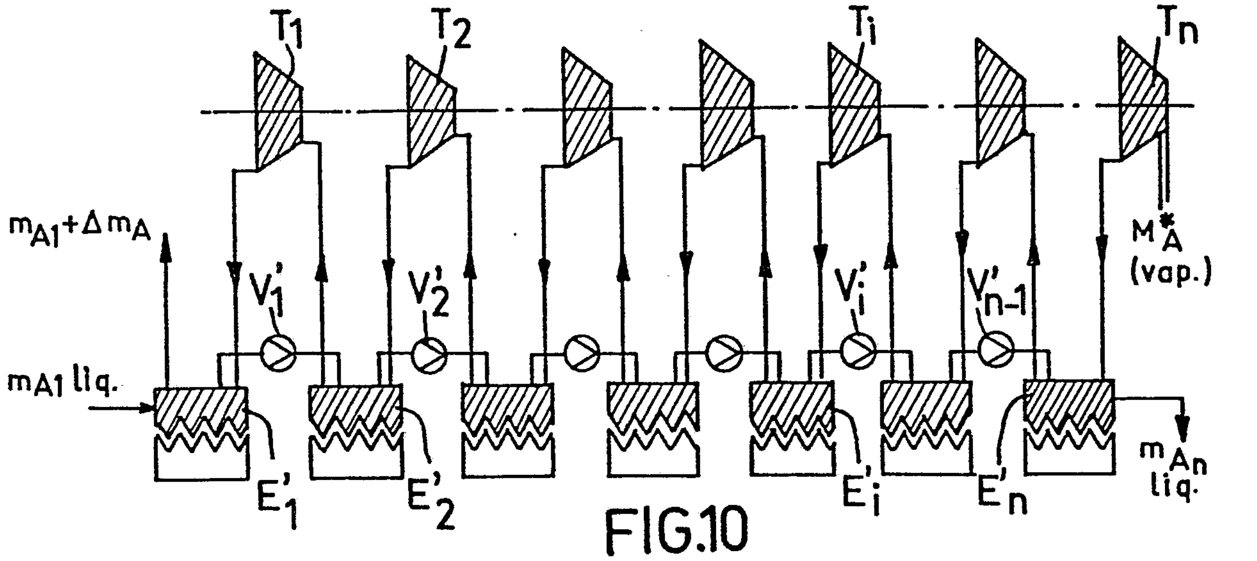


FIG.10

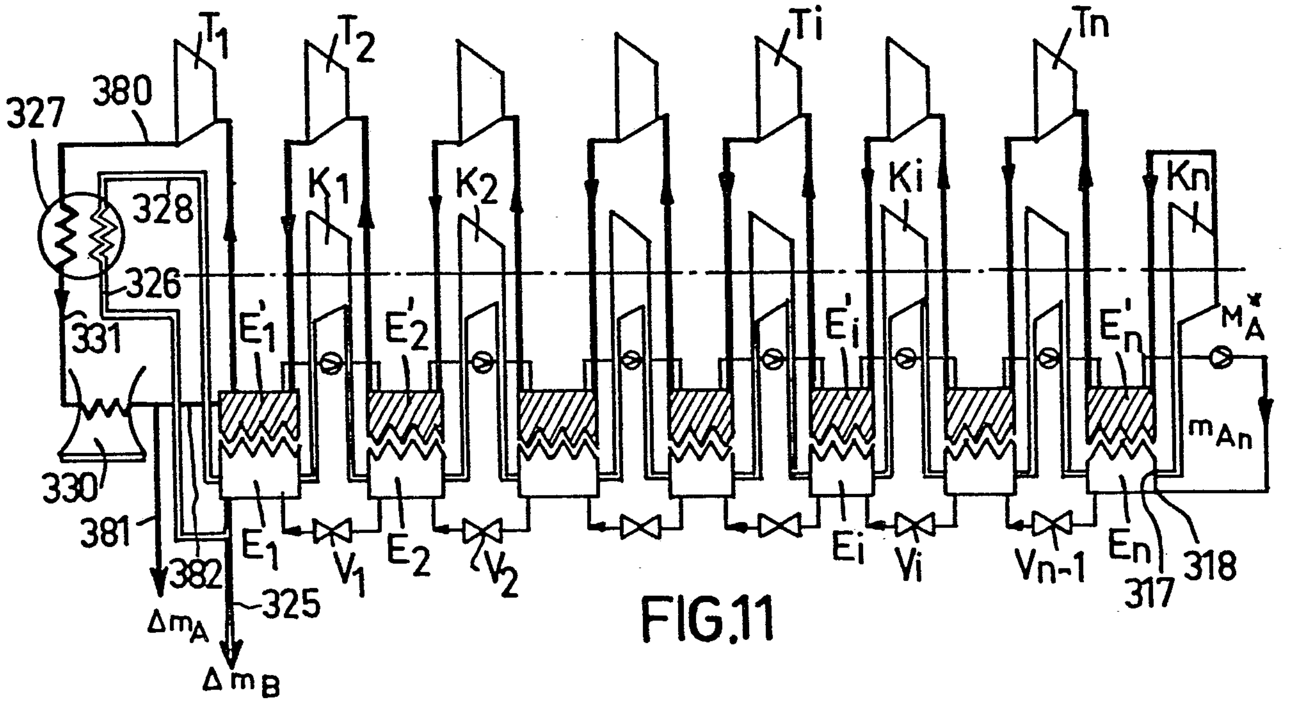


FIG.11

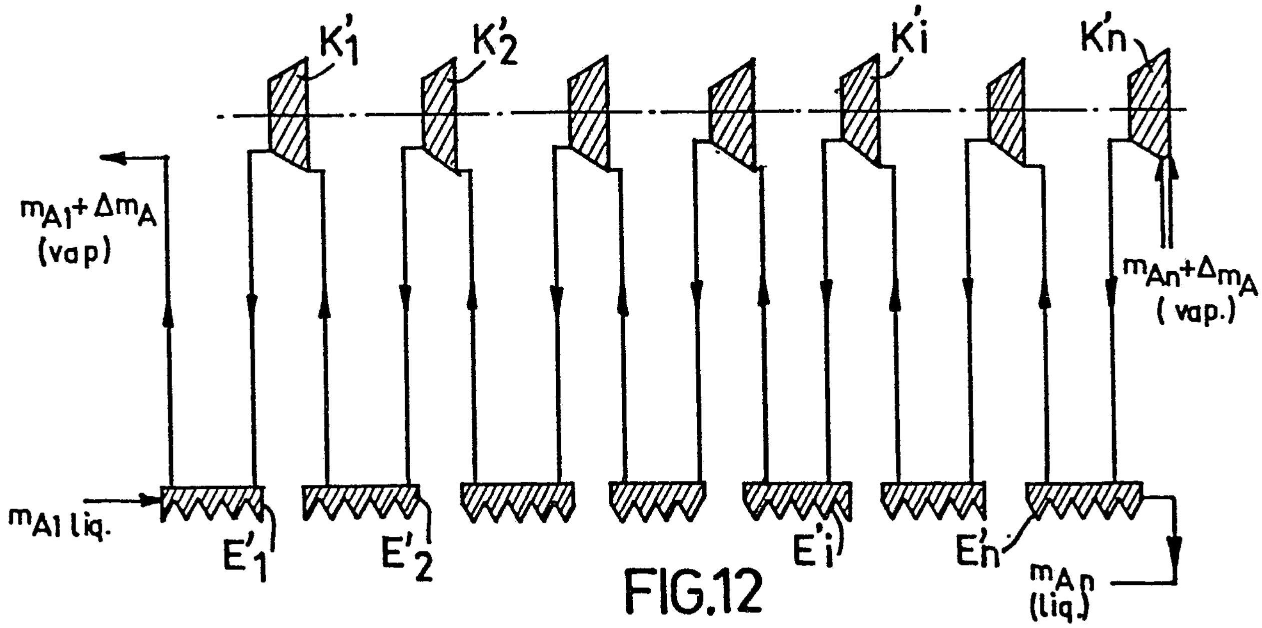


FIG.12

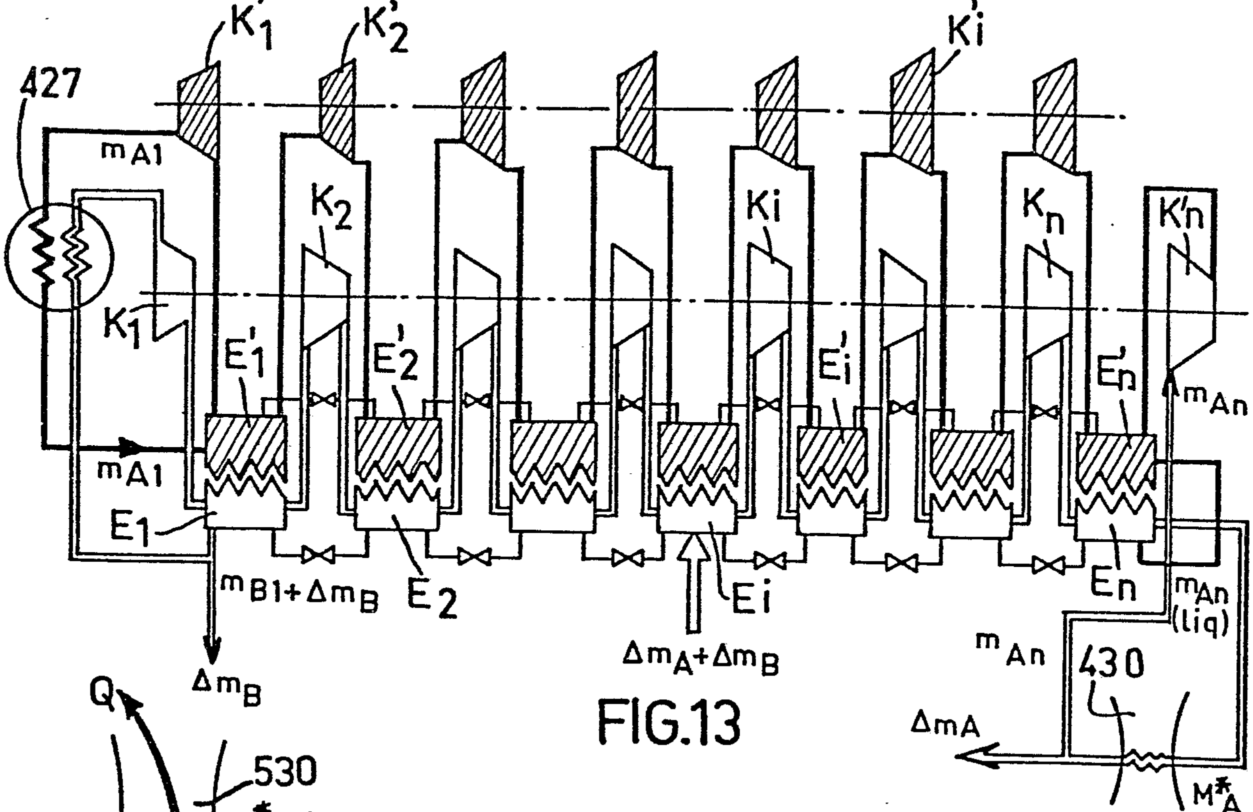
427
$K'_1$
$K'_2$
$K'_i$
$m_{A1}$
$K_2$
$K_i$
$K_n$
$K'_n$
$K_1$
$E'_1$
$E'_2$
$E'_i$
$E'_n$
$m_{An}$
$m_{A1}$
$E_1$
$m_{B1}+\Delta m_B$
$E_2$
$E_i$
$E_n$
$m_{An}$ (liq)
$\Delta m_B$
$\Delta m_A+\Delta m_B$
$m_{An}$
430
$\Delta m_A$
$M^*_A$

FIG.13

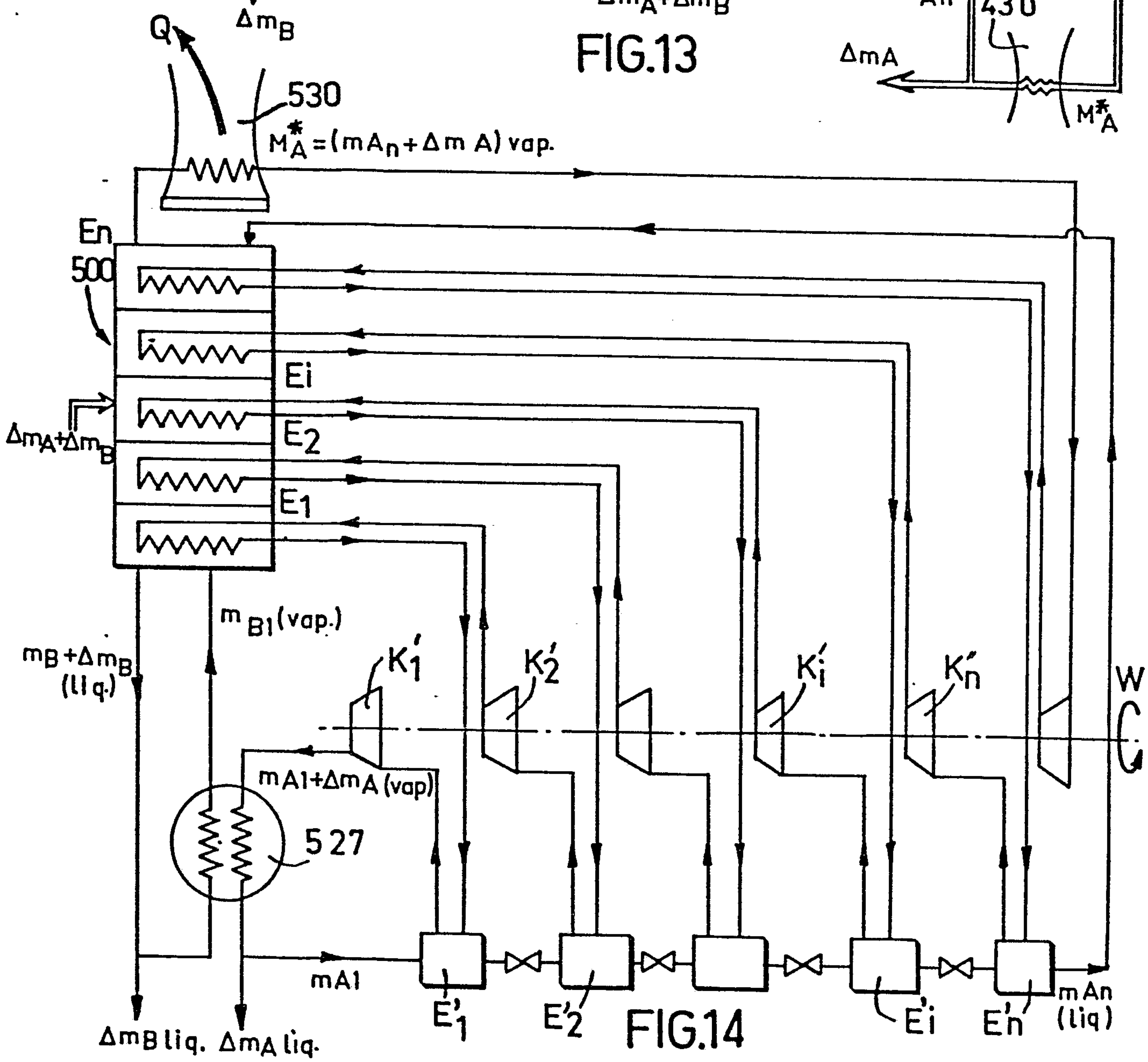
Q
530
$M^*_A = (m_{An} + \Delta m_A)$ vap.
En
500
Ei
$E_2$
$E_1$
$\Delta m_A+\Delta m_B$
$m_{B1}$(vap.)
$m_B+\Delta m_B$ (liq.)
$K'_1$
$K'_2$
$K'_i$
$K''_n$
W
$m_{A1}+\Delta m_A$ (vap)
527
$m_{A1}$
$E'_1$
$E'_2$
$E'_i$
$E'_n$
$m_{An}$ (liq)
$\Delta m_B$ liq.
$\Delta m_A$ liq.

FIG.14

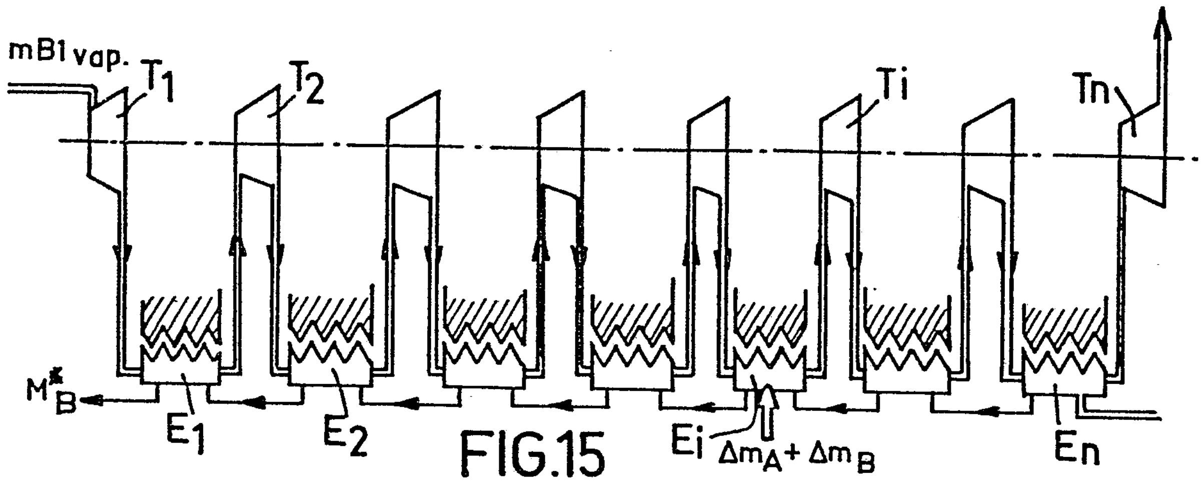


FIG.15

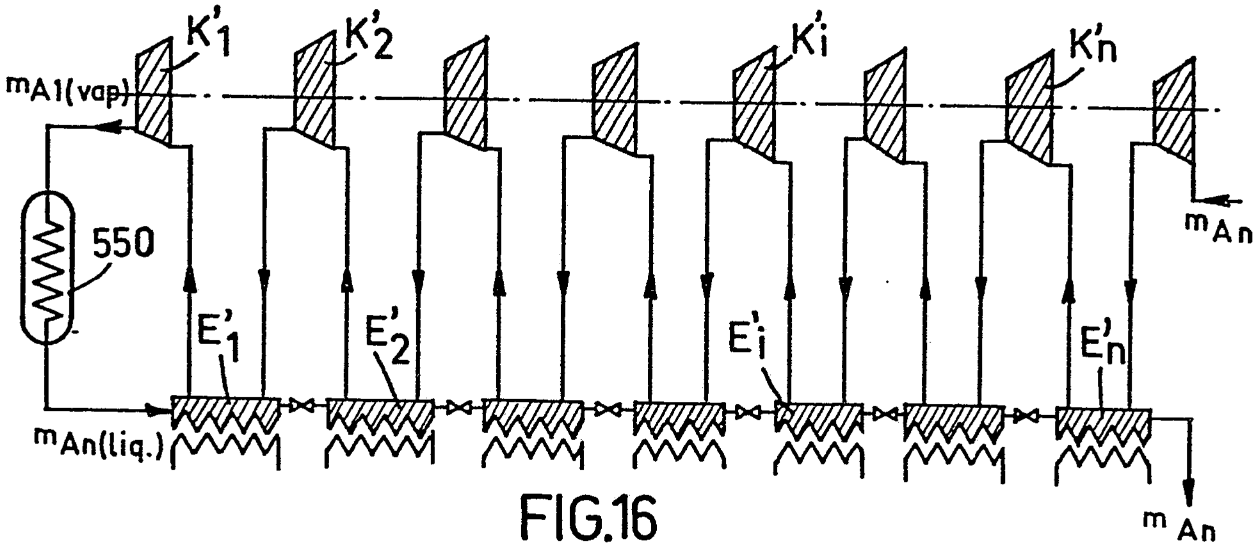


FIG.16

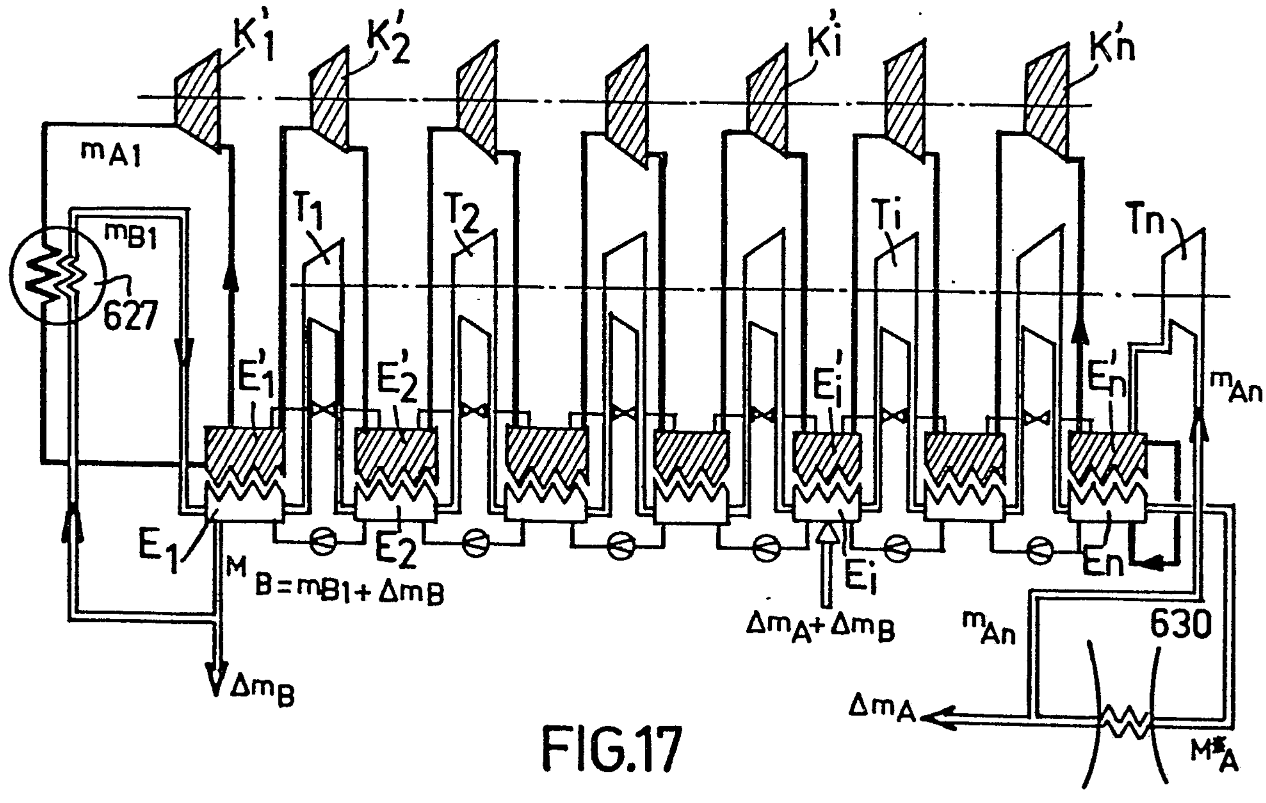


FIG.17

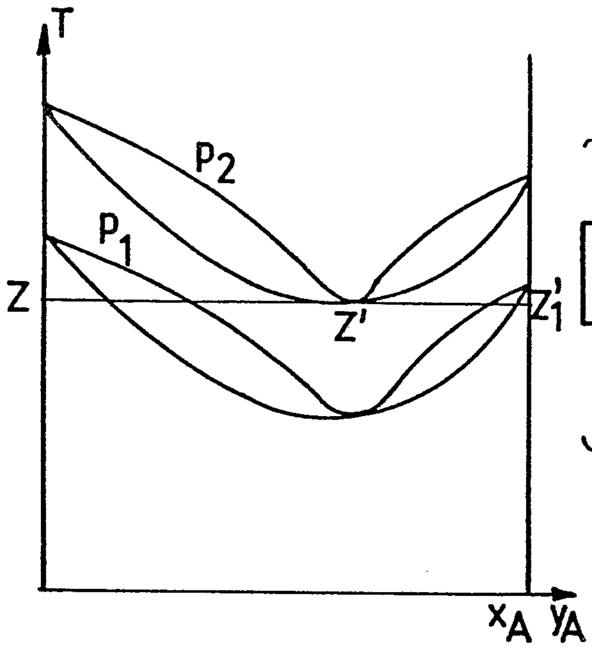


FIG.18

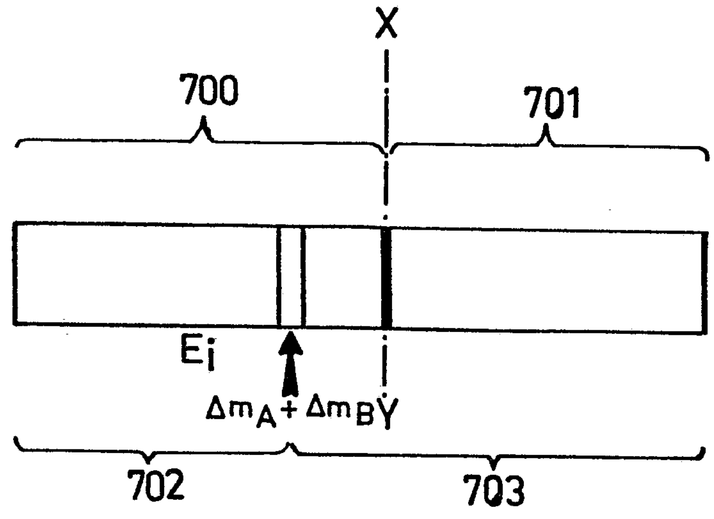


FIG.19

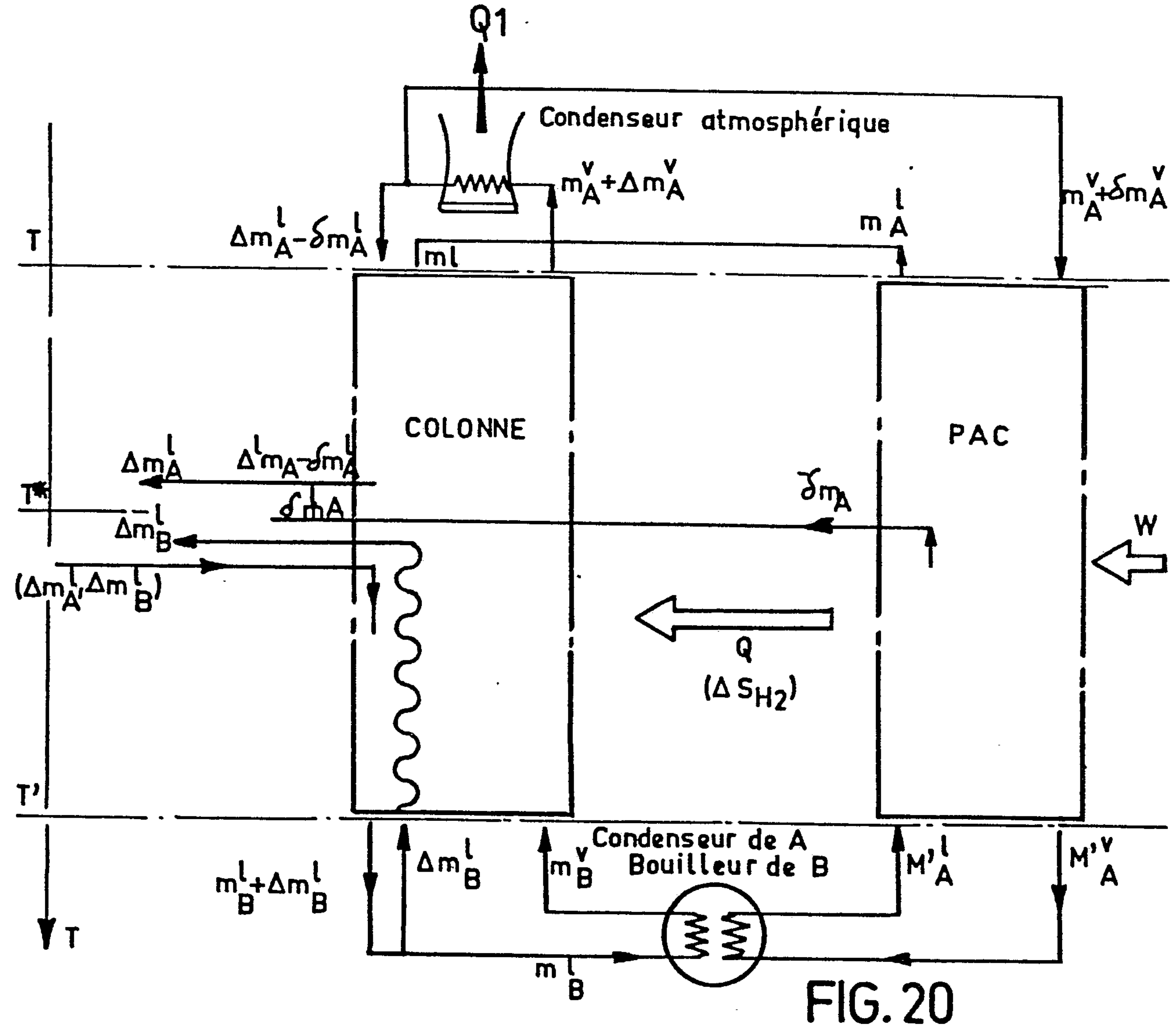


FIG. 20

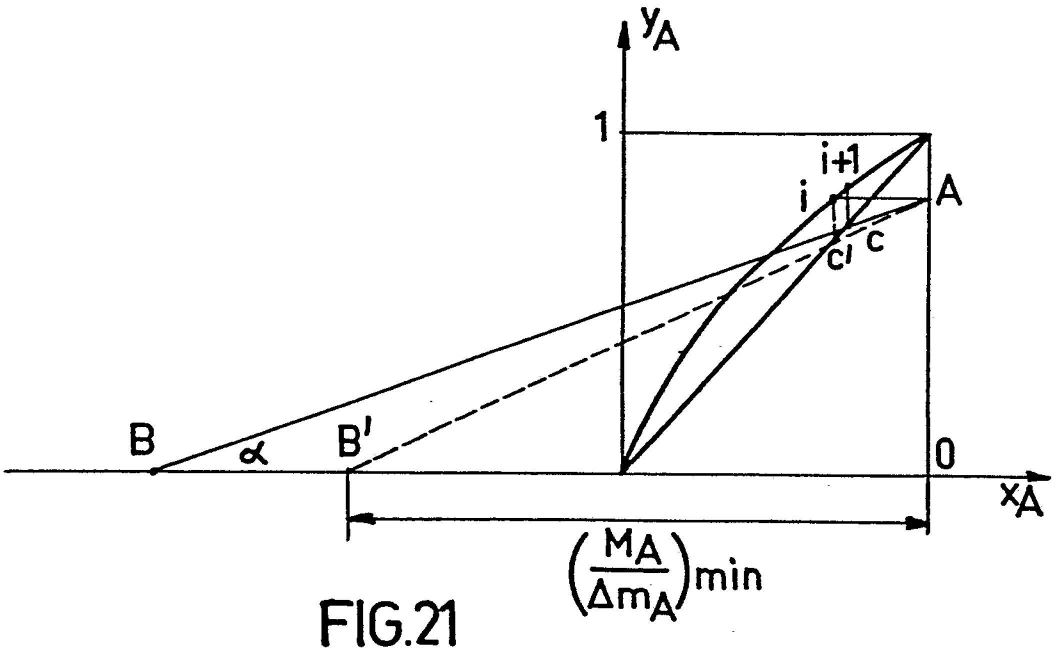


FIG.21

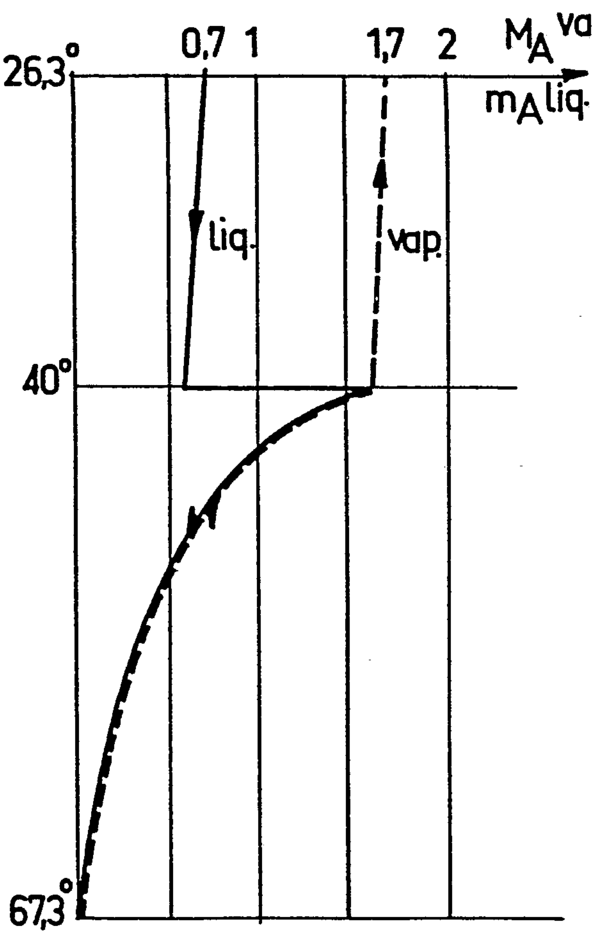


FIG.22a

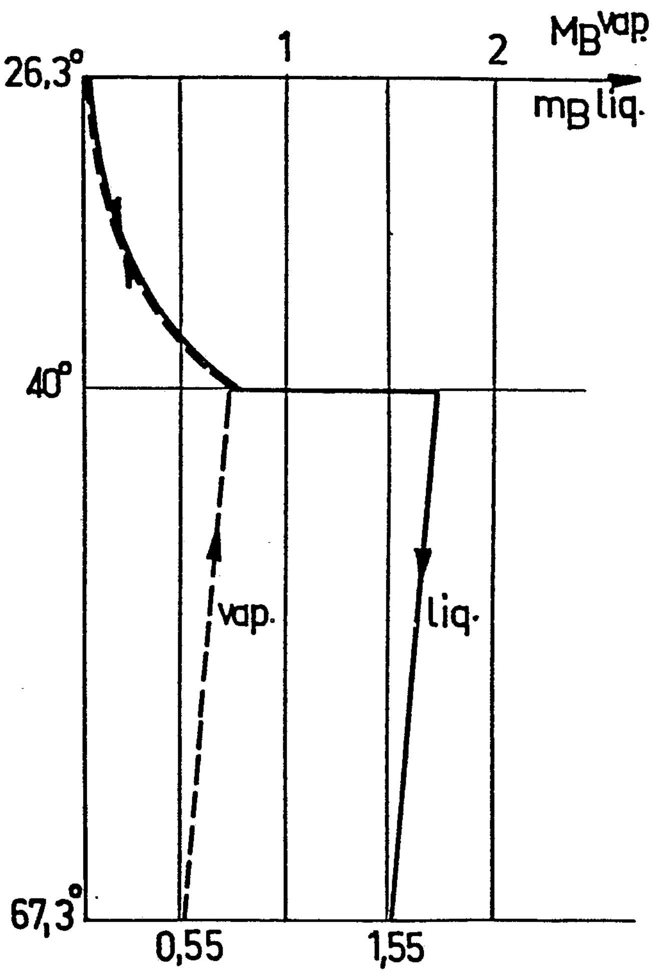


FIG.22b

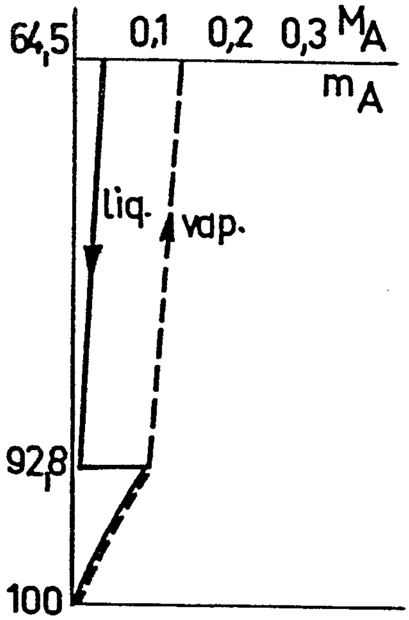


FIG.23a

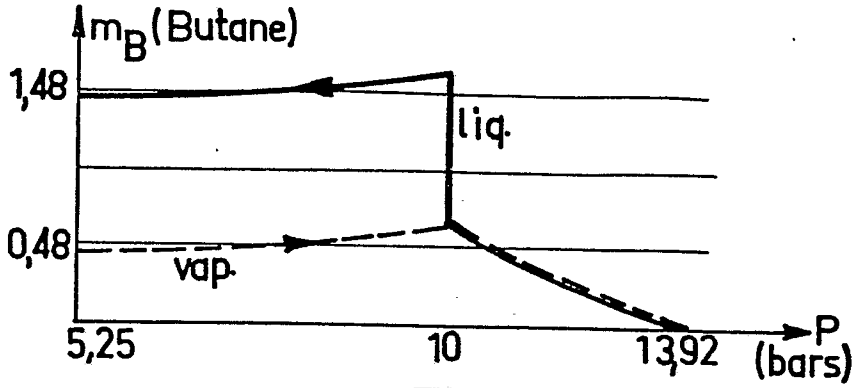


FIG.24a

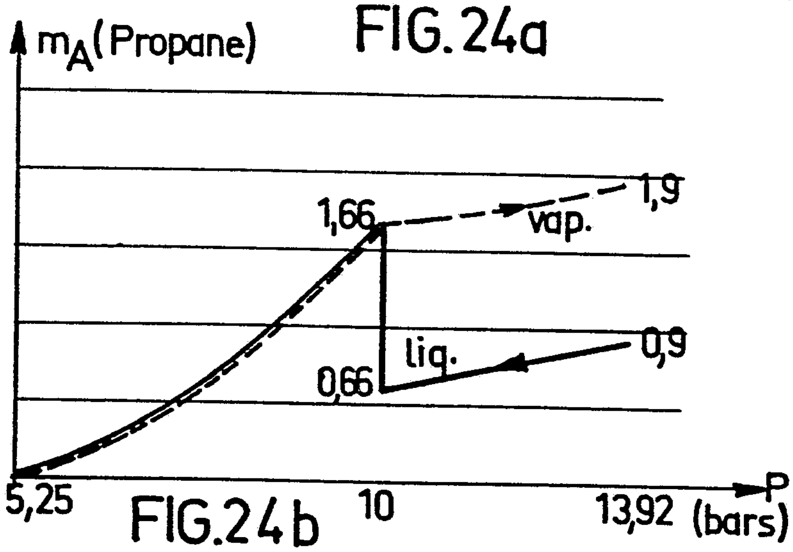


FIG.24b

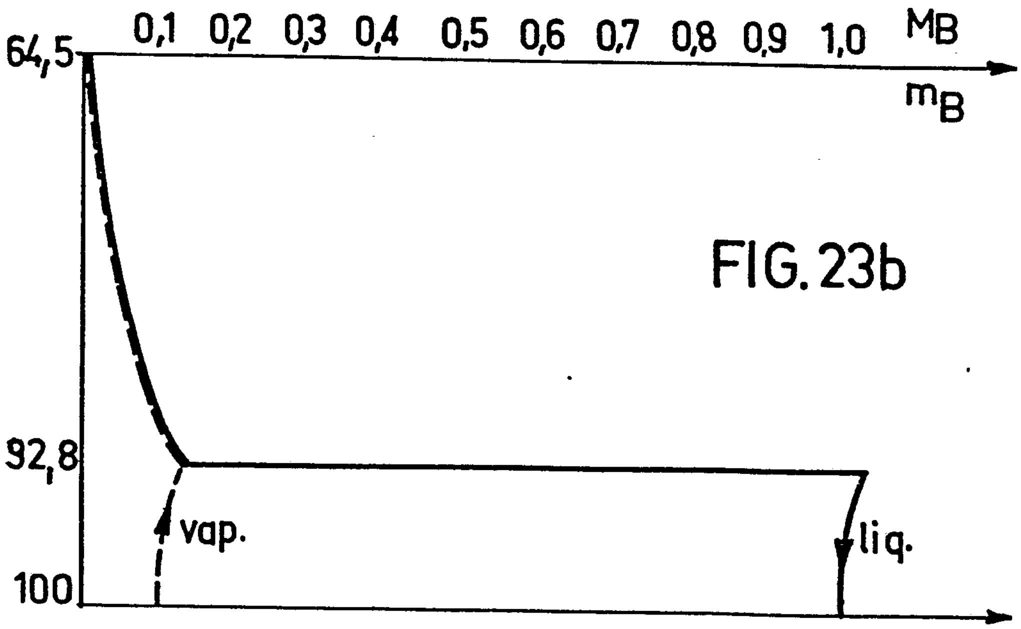


FIG.23b

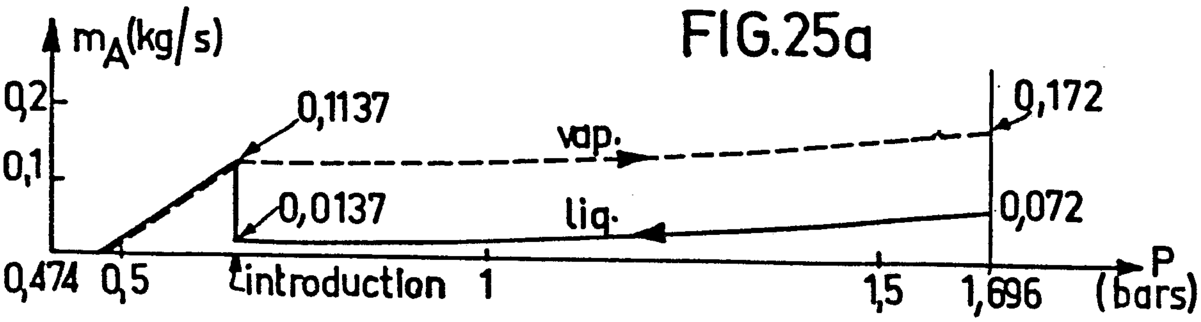


FIG.25a

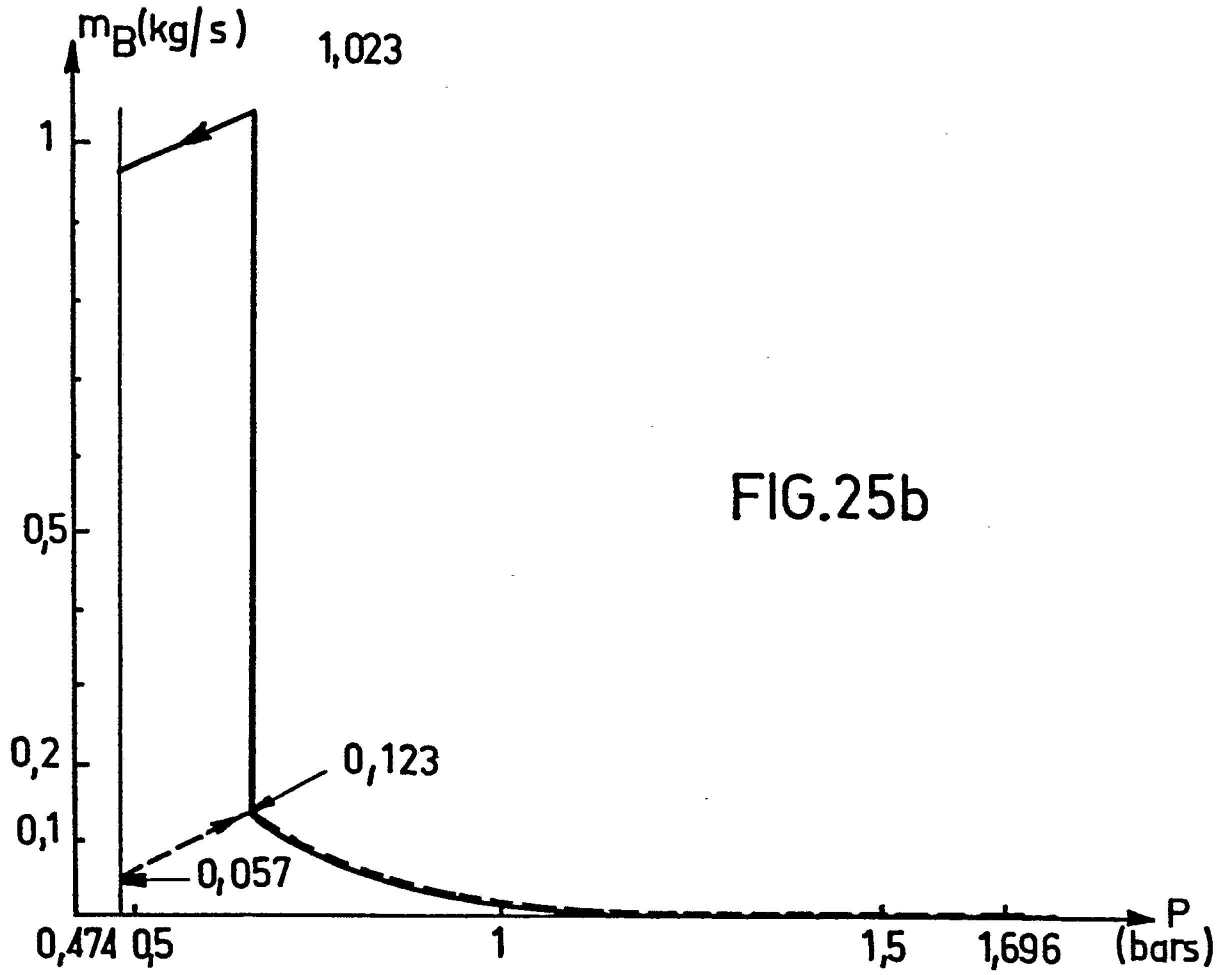


FIG.25b

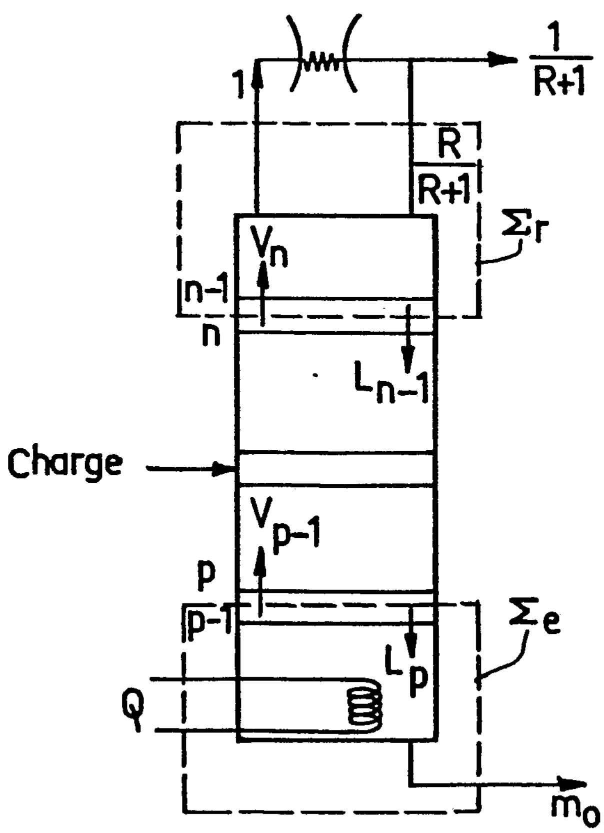


FIG.26

Office européen des brevets

# RAPPORT DE RECHERCHE EUROPEENNE

0045699

Numéro de la demande

EP 81 40 1259

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| A | FR - A - 2 439 035 (CEM) | | B 01 D 1/28<br>3/36<br>3/00<br>3/14<br>1/26 |
| A | FR - A - 2 430 250 (CEM) | | |
| A | FR - A - 2 265 430 (GIANNITRAPANI) | | |
| A | FR - A - 2 004 777 (TREADWELL CORP.) | | |
| A | FR - A - 1 406 232 (BAYER) | | |
| A | US - A - 2 619 453 (R. ANDERSEN) | | |
| | ---- | | |

DOMAINES TECHNIQUES RECHERCHES (Int. Cl.³)

B 01 D 3/00
3/14
1/00
1/26
1/28
3/36
F 24 J 3/04
F 25 B 1/10
F 04 D 29/58

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-11-1981 | VAN BELLEGHEM |